(19) Europäisches Patentamt
European Patent Office
Office européen des brevets

(11) **EP 4 346 074 A1**

(12) **EUROPEAN PATENT APPLICATION**

(43) Date of publication:
**03.04.2024  Bulletin 2024/14**

(21) Application number: **23195059.3**

(22) Date of filing: **04.09.2023**

(51) International Patent Classification (IPC):
**H02M 1/00** *(2006.01)*          *H02M 3/335* *(2006.01)*
**H02M 3/00** *(2006.01)*

(52) Cooperative Patent Classification (CPC):
**H02M 1/0058;** H02M 3/01; H02M 3/33571;
Y02B 70/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **30.09.2022   CN 202211215525**

(71) Applicant: **Huawei Digital Power Technologies
Co., Ltd.
Shenzhen, 518043 (CN)**

(72) Inventors:
• **KANG, Liangyun
  Shenzhen, 518043 (CN)**
• **CHIN, Ken
  Shenzhen, 518043 (CN)**
• **WANG, Bo
  Shenzhen, 518043 (CN)**
• **DAI, Baolei
  Shenzhen, 518043 (CN)**

(74) Representative: **Epping - Hermann - Fischer
Patentanwaltsgesellschaft mbH
Schloßschmidstraße 5
80639 München (DE)**

(54) **ASYMMETRIC HALF-BRIDGE CONVERTER WITH SWITCHING SIGNAL DELAY
DETERMINATION FOR ZVS**

(57)    This application relates to the field of power supply technologies, and in particular, to a converter and a control method therefor. The converter includes a primary switching transistor, an auxiliary switching transistor, a drive circuit, and a control circuit. The control circuit is configured to: obtain a first moment at which a first rising edge of a first drive signal sent to the drive circuit is located, where the first drive signal is used to conduct or cut off the primary switching transistor; obtain a second moment at which a value of a half-bridge midpoint voltage of the converter reaches a first voltage threshold, and determine a difference between the first moment and the second moment as a drive delay of the drive circuit, where the first voltage threshold is an input voltage value of the converter or a zero voltage value; and determine a third moment based on the drive delay, and output a second rising edge of the first drive signal at the third moment. According to the converter and the control method therefor provided in this application, a ZVS control effect of the converter can be improved, and working efficiency of the converter can be improved.

FIG. 1

EP 4 346 074 A1

## Description

## TECHNICAL FIELD

This application relates to the field of power supply technologies, and in particular, to a converter and a control method therefor.

## BACKGROUND

An asymmetrical half-bridge (asymmetrical half-bridge converter, AHB) topology may achieve a wide-range output in a simple manner, and may implement zero voltage switching (zero voltage switching, ZVS) and zero current switching (zero current switching, ZCS) of a primary switching transistor and an auxiliary switching transistor of the asymmetrical half-bridge topology by using a component of the asymmetrical half-bridge topology. Therefore, a direct current-to-direct current (direct current-to-direct current, DC-DC) converter (briefly referred to as an asymmetrical half-bridge converter) implemented based on the asymmetrical half-bridge topology is proposed and widely applied to the power supply field.

For the asymmetrical half-bridge converter, ZVS of a primary switching transistor may be implemented by conducting the primary switching transistor at a moment at which a half-bridge midpoint voltage of the asymmetrical half-bridge converter is resonant to a peak value or a valley value, and ZVS of an auxiliary switching transistor may be implemented by conducting or cutting off the auxiliary switching transistor at a preset moment in a cut-off period of the primary switching transistor of the asymmetrical half-bridge converter. As a switching frequency increases and there is a requirement for energy saving, a drive delay caused by a drive circuit used for the asymmetrical half-bridge converter starts to affect a ZVS control effect of the asymmetrical half-bridge converter, and further affects working efficiency of the asymmetrical half-bridge converter. The primary switching transistor is conducted duration corresponding to a drive delay ahead, to ensure that the primary switching transistor is conducted at the moment at which the half-bridge midpoint voltage is resonant to the peak value or the valley value, to eliminate impact of the drive delay on working efficiency of the asymmetrical half-bridge converter. However, a drive delay used when an existing asymmetrical half-bridge converter performs ZVS control is manually configured by a user based on an actual test value of the asymmetrical half-bridge converter. In this manner, use complexity of the asymmetrical half-bridge converter is high, and the ZVS control effect of the asymmetrical half-bridge converter is poor and working efficiency is low because the manually configured drive delay is inaccurate.

## SUMMARY

To resolve the foregoing problems, this application provides a converter and a control method therefor, to accurately detect a drive delay, and accurately determine, with reference to the drive delay, a third moment at which a primary switching transistor is conducted, thereby ensuring that the primary switching transistor is conducted at a resonant peak value or a resonant valley value. In this way, a ZVS control effect of the converter can be improved, and working efficiency of the converter can be improved.

According to a first aspect, an embodiment of this application provides a converter. The converter includes a primary switching transistor, an auxiliary switching transistor, a drive circuit, and a control circuit. The primary switching transistor and the auxiliary switching transistor are connected in series between an input terminal of the converter and a reference ground, and the control circuit is connected to each of the primary switching transistor and the auxiliary switching transistor through the drive circuit. In actual work, the control circuit is configured to obtain a first moment at which a first rising edge of a first drive signal is located. The first drive signal is used by the drive circuit to conduct or cut off the primary switching transistor. The control circuit is further configured to: obtain a second moment at which a value of a half-bridge midpoint voltage of the converter reaches a first voltage threshold, and determine a difference between the first moment and the second moment as a drive delay of the drive circuit. Herein, the first voltage threshold is an input voltage value of the converter or a zero voltage value. The control circuit is further configured to: determine a third moment based on the drive delay, and output a second rising edge of the first drive signal to the drive circuit at the third moment.

It should be understood that, the converter may accurately detect, by using the control circuit, the drive delay generated by the drive circuit, and may further accurately determine, with reference to the drive delay, a third moment at which the control circuit conducts the primary switching transistor again. In this way, a problem that use complexity of an existing converter is high because the drive delay needs to be manually configured. In addition, because a drive delay detected in real time is more accurate, when the second rising edge of the first drive signal is output at a third moment determined based on the drive delay, it can be ensured that the primary switching transistor is accurately conducted at a resonant peak value or a resonant valley value of the half-bridge midpoint voltage. In this way, an overall ZVS control effect of the converter can be improved, and working efficiency of the converter can be improved.

With reference to the first aspect, in a feasible implementation, the auxiliary switching transistor is connected to the reference ground. The control circuit is configured to determine a fourth moment at which the half-bridge midpoint voltage reaches a resonant peak value.

The control circuit is further configured to determine the third moment based on the fourth moment and the drive delay. The third moment is before the fourth moment, and a time difference between the third moment and the fourth moment is the drive delay.

It should be understood that, because there is a drive delay in the drive circuit, there is a drive delay between rising edges or falling edges corresponding to the first drive signal and a signal actually received by the primary switching transistor. Therefore, when a 2nd rising edge of the first drive signal is output at the third moment determined with reference to the drive delay and the fourth moment at which the resonant peak value of the half-bridge midpoint voltage occurs, it can be ensured that the primary switching transistor just receives a rising edge at the fourth moment, so that the primary switching transistor can be just conducted at the fourth moment, and the primary switching transistor can be accurately conducted at the resonant peak value of the half-bridge midpoint voltage.

With reference to the first aspect, in a feasible implementation, the control circuit is configured to obtain a first deadband midpoint moment of the half-bridge midpoint voltage. A value of the half-bridge midpoint voltage at the first deadband midpoint moment is a half of the resonant peak value. The control circuit is further configured to determine, based on the first deadband midpoint moment and one quarter of a resonance period of the half-bridge midpoint voltage, the fourth moment at which the half-bridge midpoint voltage reaches the resonant peak value.

With reference to the first aspect, in a feasible implementation, the converter further includes a transformer. Input terminals of the transformer are respectively connected to two terminals of the auxiliary switching transistor, and an output terminal of the transformer is connected to an output terminal of the converter. The transformer includes an auxiliary winding, a first voltage divider resistor, and a second voltage divider resistor that are connected in series, the auxiliary winding and a primary-side winding of the transformer are coupled by changing an undotted terminal or changing a dotted terminal, and one terminal of the second voltage divider resistor is connected to the reference ground. The control circuit is configured to obtain a first feedback voltage from a common terminal of the first voltage divider resistor and the second voltage divider resistor. The control circuit is further configured to: after determining that the auxiliary switching transistor is cut off, determine that a moment at which a value of the first feedback voltage reaches a zero voltage value is the first deadband midpoint moment of the half-bridge midpoint voltage.

It should be understood that, the first deadband midpoint moment of the half-bridge midpoint voltage is detected by performing zero-crossing detection on the first feedback voltage. This manner is simple and reliable, may ensure detection efficiency and accuracy of the first deadband midpoint moment, and may ensure detection efficiency and accuracy of the fourth moment.

With reference to the first aspect, in a feasible implementation, the control circuit includes a controller and a first comparator. A first terminal of the first comparator is connected to the common terminal of the first voltage divider resistor and the second voltage divider resistor, a second terminal of the first comparator is connected to the reference ground, and a third terminal of the first comparator is connected to a first terminal of the controller. The first comparator is configured to: obtain a first feedback voltage from the common terminal of the first voltage divider resistor and the second voltage divider resistor, and send a first indication signal to the controller when it is detected that a value of the first feedback voltage is equal to a zero voltage value. After determining that the auxiliary switching transistor is cut off, the controller is configured to determine that a moment at which the first indication signal is detected is the first deadband midpoint moment of the half-bridge midpoint voltage.

It should be understood that, the control circuit detects the first deadband midpoint moment by using the first comparator, to avoid a requirement generated for an analog-to-digital converter or a digital-to-analog converter when digital logic processing is performed, and simplify a structure of the control circuit.

With reference to the first aspect, in a feasible implementation, the first voltage threshold is the input voltage value of the converter, and the auxiliary winding and the primary-side winding of the transformer are coupled by changing the undotted terminal. The control circuit is configured to determine that a moment at which it is detected for a first time that the value of the first feedback voltage is less than a second voltage threshold is the second moment at which the value of the half-bridge midpoint voltage of the converter reaches the input voltage value of the converter. The second voltage threshold is less than a zero voltage value, and a difference between the second voltage threshold and the zero voltage value is less than or equal to a first preset difference value.

It should be understood that, because the value of the half-bridge midpoint voltage gradually increases to the input voltage value only after the primary switching transistor is really conducted, if a moment at which the value of the half-bridge midpoint voltage really reaches the input voltage value is determined as a second moment at which the primary switching transistor is really conducted, the detected second moment is reached after a delay generated in a process in which the half-bridge midpoint voltage gradually changes is introduced, and the detected second moment is inaccurate. In the foregoing implementation, the control circuit determines, by detecting a moment at which the value of the first feedback voltage reaches, for a first time, the second voltage threshold less than the zero voltage value, a moment at which the value of the half-bridge midpoint voltage increases to the input voltage value, to indirectly determine a moment at which the primary switching transistor is really conducted. The second voltage threshold slightly less than the zero voltage value is used as a condition for determining the second moment at which the primary switching transistor is really conducted, to effectively reduce a detection delay generated in the process in which the half-bridge midpoint voltage gradually changes, and ensure accuracy of the detected second moment.

With reference to the first aspect, in a feasible implementation, the control circuit includes the controller, a timer, and a second comparator. A first terminal of the second comparator is connected to the common terminal of the first voltage divider resistor and the second voltage divider resistor, a second terminal of the second comparator is connected to a first reference voltage source, a voltage value of the first reference voltage source is the second voltage threshold, a third terminal of the second comparator is connected to a first terminal of the timer, a second terminal of the timer is connected to a second terminal that is of the controller and that outputs the first drive signal, and a third terminal of the timer is connected to a third terminal of the controller. The timer is configured to: determine that a moment at which the first rising edge is detected is the first moment, and start timing at the first moment. The second comparator is configured to send a second indication signal to the timer when it is detected for the first time that the value of the first feedback voltage is less than the second voltage threshold. The timer is configured to: determine that a moment at which the second indication signal is detected is the second moment, and stop timing at the second moment. The controller is further configured to: obtain timing duration of the timer, and determine the timing duration as the drive delay. It should be understood that, the control circuit detects the drive delay by using an analog device such as the timer and the second comparator, to avoid a requirement generated for an analog-to-digital converter and a digital-to-analog converter when digital logic processing is performed, and simplify a structure of the control circuit.

With reference to the first aspect, in a feasible implementation, the first voltage threshold is the input voltage value of the converter, and the auxiliary winding and the primary-side winding of the transformer are coupled by changing the dotted terminal. The control circuit is configured to determine that a moment at which it is detected for a first time that the value of the first feedback voltage is greater than a third voltage threshold is the second moment at which the value of the half-bridge midpoint voltage of the converter reaches the input voltage value of the converter. The third voltage threshold is greater than a zero voltage value, and a difference between the third voltage threshold and the zero voltage value is less than or equal to a second preset difference value.

It should be understood that, the control circuit determines, by detecting a moment at which the value of the first feedback voltage reaches, for a first time, the third voltage threshold greater than the zero voltage value, a moment at which the value of the half-bridge midpoint voltage increases to the input voltage value, to indirectly determine the second moment at which the primary switching transistor is really conducted. The third voltage threshold slightly greater than the zero voltage value is used as a condition for determining the second moment at which the primary switching transistor is really conducted, to effectively reduce a detection delay generated in the process in which the half-bridge midpoint voltage gradually changes, and ensure accuracy of the detected second moment.

With reference to the first aspect, in a feasible implementation, the control circuit includes the controller, a timer, and a second comparator. A first terminal of the second comparator is connected to the common terminal of the first voltage divider resistor and the second voltage divider resistor, a second terminal of the second comparator is connected to a second reference voltage source, a voltage value of the second reference voltage source is the third voltage threshold, a third terminal of the second comparator is connected to a first terminal of the timer, a second terminal of the timer is connected to a second terminal that is of the control circuit and that outputs the first drive signal, and a third terminal of the timer is connected to a third terminal of the controller. The timer is configured to: determine that a moment at which the first rising edge is detected is the first moment, and start timing at the first moment. The second comparator is configured to send a second indication signal to the timer when it is detected for the first time that the value of the first feedback voltage is greater than the third voltage threshold. The timer is configured to: determine that a moment at which the second indication signal is detected is the second moment, and stop timing at the second moment. The controller is further configured to: obtain timing duration of the timer, and determine the timing duration as the drive delay.

It should be understood that, the control circuit detects the drive delay by using an analog device such as the timer and the second comparator, to avoid a requirement generated for an analog-to-digital converter and a digital-to-analog converter when digital logic processing is performed, and simplify a structure of the control circuit.

With reference to the first aspect, in a feasible implementation, the primary switching transistor is connected to the reference ground. The control circuit is configured to determine a fifth moment at which the half-bridge midpoint voltage reaches a resonant valley value. The control circuit is further configured to determine the third moment based on the fifth moment and the drive delay. The third moment is before the fifth moment, and a time difference between the third moment and the fifth moment is the drive delay. It should be understood that, when a 2nd rising edge of the first drive signal is output at the third moment determined with reference to the drive delay and the fifth moment at which the resonant valley value of the half-bridge midpoint voltage occurs, it can be ensured that the primary switching transistor just receives a rising edge at the fifth moment, so that the primary switching transistor can be just conducted at the fifth moment, the primary switching transistor can be accurately conducted at the resonant valley value of the half-bridge midpoint voltage, and a ZVS control effect of the converter can be improved.

With reference to the first aspect, in a feasible implementation, the control circuit is configured to obtain a second deadband midpoint moment of the half-bridge midpoint voltage. A value of the half-bridge midpoint voltage at the second deadband midpoint moment is a sum of the resonant valley value and a half of a difference between the input voltage value of the converter and the resonant valley value of the half-bridge midpoint voltage. The control circuit is further configured to determine, based on the second deadband midpoint moment and one quarter of a resonance period of the half-bridge midpoint voltage, the fifth moment at which the half-bridge midpoint voltage reaches the resonant valley value.

With reference to the first aspect, in a feasible implementation, the converter further includes a transformer. Input terminals of the transformer are respectively connected to two terminals of the auxiliary switching transistor, an output terminal of the transformer is connected to an output terminal of the converter, the transformer includes an auxiliary winding, a first voltage divider resistor, and a second voltage divider resistor that are connected in series, the auxiliary winding and a primary-side winding of the transformer are coupled by changing an undotted terminal or changing a dotted terminal, and one terminal of the second voltage divider resistor is connected to the reference ground. The control circuit is configured to obtain a second feedback voltage from a common terminal of the first voltage divider resistor and the second voltage divider resistor. The control circuit is further configured to: after determining that the auxiliary switching transistor is cut off, determine that a moment at which a value of the second feedback voltage reaches a zero voltage value is the second deadband midpoint moment of the half-bridge midpoint voltage.

It should be understood that, the second deadband midpoint moment of the half-bridge midpoint voltage is detected by performing zero-crossing detection on the second feedback voltage. This manner is simple and reliable, may ensure detection efficiency and accuracy of the second deadband midpoint moment, and may ensure detection efficiency and accuracy of the fifth moment.

With reference to the first aspect, in a feasible implementation, the control circuit includes a controller and a first comparator. A first terminal of the first comparator is connected to the common terminal of the first voltage divider resistor and the second voltage divider resistor, a second terminal of the first comparator is connected to the reference ground, and a third terminal of the first comparator is connected to a first terminal of the controller. The first comparator is configured to: obtain a second feedback voltage from the common terminal of the first voltage divider resistor and the second voltage divider resistor, and send a third indication signal to the controller when it is detected that a value of the second feedback voltage is equal to a zero voltage value. After determining that the auxiliary switching transistor is cut off, the controller is configured to determine that a moment at which the third indication signal is detected is the second deadband midpoint moment of the half-bridge midpoint voltage.

It should be understood that, the control circuit detects the second deadband midpoint moment by using an analog device such as the first comparator, to avoid a requirement generated for an analog-to-digital converter or a digital-to-analog converter when digital logic processing is performed, and simplify a structure of the control circuit.

With reference to the first aspect, in a feasible implementation, the first voltage threshold is a zero voltage value, and the auxiliary winding and the primary-side winding of the transformer are coupled by changing the undotted terminal. The control circuit is configured to determine that a moment at which it is detected for a first time that the value of the second feedback voltage is less than a fourth voltage threshold is the second moment at which the value of the half-bridge midpoint voltage of the converter reaches a zero voltage value. The fourth voltage threshold is less than the zero voltage value, and a difference between the fourth voltage threshold and the zero voltage value is less than or equal to a third preset difference value.

It should be understood that, the control circuit determines, by detecting a moment at which the value of the second feedback voltage reaches, for a first time, the fourth voltage threshold less than the zero voltage value, a moment at which the value of the half-bridge midpoint voltage decreases to the zero voltage value, to indirectly determine a moment at which the primary switching transistor is really conducted. The fourth voltage threshold slightly less than the zero voltage value is used as a condition for determining the second moment at which the primary switching transistor is really conducted, to effectively reduce a detection delay generated in the process in which the half-bridge midpoint voltage gradually changes, and ensure accuracy of the detected second moment.

With reference to the first aspect, in a feasible implementation, the control circuit includes the controller, a timer, and a second comparator. A first terminal of the second comparator is connected to the common terminal of the first voltage divider resistor and the second voltage divider resistor, a second terminal of the second comparator is connected to a third reference voltage source, a voltage value of the third reference voltage source is the fourth voltage threshold, a third terminal of the second comparator is connected to a first terminal of the timer, a second terminal of the timer is connected to a second terminal that is of the control circuit and that outputs the first drive signal, and a third terminal of the timer is connected to a third terminal of the controller. The timer is configured to: determine that a moment at which the first rising edge is detected is the first moment, and start timing at the first moment. The second comparator is configured to send a fourth indication signal to the timer when it is detected for the first time that the value of the second feedback voltage is less than the fourth voltage threshold. The timer is configured to: determine that a moment at which the fourth indication signal is detected is the second moment, and stop timing at the second moment. The controller is further configured to: obtain timing duration of the timer, and determine the timing duration as the drive delay.

It should be understood that, the control circuit detects the drive delay by using an analog device such as the timer and the second comparator, to avoid a requirement generated for an analog-to-digital converter and a digital-to-analog converter when digital logic processing is performed, and simplify a structure of the control circuit.

With reference to the first aspect, in a feasible implementation, the first voltage threshold is a zero voltage value, and the auxiliary winding and the primary-side winding of the transformer are coupled by changing the dotted terminal. The control circuit is configured to determine that a moment at which it is detected for a first time that the value of the second feedback voltage is greater than a fifth voltage threshold is the second moment at which the value of the half-bridge midpoint voltage of the converter reaches a zero voltage value. The fifth voltage threshold is greater than the zero voltage value, and a difference between the fifth voltage threshold and the zero voltage value is less than or equal to a fourth preset difference value.

It should be understood that, the control circuit determines, by detecting a moment at which the value of the second feedback voltage reaches, for a first time, the third voltage threshold greater than the zero voltage value, a moment at which the value of the half-bridge midpoint voltage reaches the zero voltage value, to indirectly determine the second moment at which the primary switching transistor is really conducted. The fifth voltage threshold slightly greater than the zero voltage value is used as a condition for determining the second moment at which the primary switching transistor is really conducted, to effectively reduce a detection delay generated in the process in which the half-bridge midpoint voltage gradually changes, and ensure accuracy of the detected second moment.

With reference to the first aspect, in a feasible implementation, the control circuit includes the controller, a timer, and a second comparator. A first terminal of the second comparator is connected to the common terminal of the first voltage divider resistor and the second voltage divider resistor, a second terminal of the second comparator is connected to a fourth reference voltage source, a voltage value of the fourth reference voltage source is the fifth voltage threshold, a third terminal of the second comparator is connected to a first terminal of the timer, a second terminal of the timer is connected to a second terminal that is of the control circuit and that outputs the first drive signal, and a third terminal of the timer is connected to a third terminal of the controller. The timer is configured to: determine that a moment at which the first rising edge is detected is the first moment, and start timing at the first moment. The second comparator is configured to send a fourth indication signal to the timer when it is detected for the first time that the value of the second feedback voltage is greater than the fifth voltage threshold. The timer is configured to: determine that a moment at which the fourth indication signal is detected is the second moment, and stop timing at the second moment. The controller is further configured to: obtain timing duration of the timer, and determine the timing duration as the drive delay.

It should be understood that, the drive delay is detected by using an analog device such as the timer and the second comparator, to avoid a requirement generated for an analog-to-digital converter and a digital-to-analog converter when digital logic processing is performed, and simplify a structure of the control circuit.

According to a second aspect, this application provides a control method for a converter. The method is applicable to the converter provided in any one of the first aspect or the feasible implementations of the first aspect, and may be performed by a control circuit in the converter. The converter includes a primary switching transistor, an auxiliary switching transistor, and a drive circuit, the primary switching transistor and the auxiliary switching transistor are connected in series between an input terminal of the converter and a reference ground, and the drive circuit is connected to each of the primary switching transistor and the auxiliary switching transistor. The control circuit may obtain a first moment at which a first rising edge of a first drive signal sent to the drive circuit is located. The first drive signal is used to conduct or cut off the primary switching transistor. The control circuit may obtain a second moment at which a value of a half-bridge midpoint voltage of the converter reaches a first voltage threshold, and determine a difference between the first moment and the second moment as a drive delay of the drive circuit. The first voltage threshold is an input voltage value of the converter or a zero voltage value. The control circuit may determine a third moment based on the drive delay, and output a second rising edge of the first drive signal to the drive circuit at the third moment.

With reference to the second aspect, in a feasible implementation, the auxiliary switching transistor is connected to the reference ground. The control circuit may determine a fourth moment at which the half-bridge midpoint voltage reaches a resonant peak value. The control circuit may determine the third moment based on the fourth moment and the drive delay. The third moment is before the fourth moment, and a time difference between the third moment and the fourth moment is the drive delay.

With reference to the second aspect, in a feasible implementation, the control circuit may obtain a first deadband midpoint moment of the half-bridge midpoint voltage. A value of the half-bridge midpoint voltage at the first deadband midpoint moment is a half of the resonant peak value. The control circuit may determine, based on the first deadband midpoint moment and one quarter of a resonance period of the half-bridge midpoint voltage, the fourth moment at which the half-bridge midpoint voltage reaches the resonant peak value. The fourth moment is after the first deadband midpoint moment.

With reference to the second aspect, in a feasible implementation, the converter further includes a transformer. Input terminals of the transformer are respectively connected to two terminals of the auxiliary switching transistor, an output terminal of the transformer is connected to an output terminal of the converter, the transformer includes an auxiliary winding, a first voltage divider resistor, and a second voltage divider resistor that are connected in series, the auxiliary winding and a primary-side winding of the transformer are coupled by changing an undotted terminal or changing a dotted terminal, and one terminal of the second voltage divider resistor is connected to the reference ground. The control circuit may obtain a first feedback voltage from a common terminal of the first voltage divider resistor and the second voltage divider resistor. After determining that the auxiliary switching transistor is cut off, the control circuit may determine that a moment at which a value of the first feedback voltage reaches a zero voltage value is the first deadband midpoint moment of the half-bridge midpoint voltage.

With reference to the second aspect, in a feasible implementation, the first voltage threshold is the input voltage value of the converter, and the auxiliary winding and the primary-side winding of the transformer are coupled by changing the undotted terminal. The control circuit may determine that a moment at which it is detected for a first time that the value of the first feedback voltage is less than a second voltage threshold is the second moment at which the value of the half-bridge midpoint voltage of the converter reaches the input voltage value of the converter. The second voltage threshold is less than a zero voltage value, and a difference between the second voltage threshold and the zero voltage value is less than or equal to a first preset difference value.

With reference to the second aspect, in a feasible implementation, the first voltage threshold is the input voltage value of the converter, and the auxiliary winding and the primary-side winding of the transformer are coupled by changing the dotted terminal. The control circuit may determine that a moment at which it is detected for a first time that the value of the first feedback voltage is greater than a third voltage threshold is the second moment at which the value of the half-bridge midpoint voltage of the converter reaches the input voltage value of the converter. The third voltage threshold is greater than a zero voltage value, and a difference between the third voltage threshold and the zero voltage value is less than or equal to a second preset difference value.

With reference to the second aspect, in a feasible implementation, the primary switching transistor is connected to the reference ground. The control circuit may determine a fifth moment at which the half-bridge midpoint voltage reaches a resonant valley value. The control circuit may determine the third moment based on the fifth moment and the drive delay. The third moment is before the fifth moment, and a time difference between the third moment and the fifth moment is the drive delay.

With reference to the second aspect, in a feasible implementation, the control circuit may obtain a second deadband midpoint moment of the half-bridge midpoint voltage. A value of the half-bridge midpoint voltage at the second deadband midpoint moment is a sum of the resonant valley value and a half of a difference between the input voltage value of the converter and the resonant valley value of the half-bridge midpoint voltage. The control circuit may determine, based on the second deadband midpoint moment and one quarter of a resonance period of the half-bridge midpoint voltage, the fifth moment at which the half-bridge midpoint voltage reaches the resonant valley value.

With reference to the second aspect, in a feasible implementation, the converter further includes a transformer. Input terminals of the transformer are respectively connected to two terminals of the auxiliary switching transistor, an output terminal of the transformer is connected to an output terminal of the converter, the transformer includes an auxiliary winding, a first voltage divider resistor, and a second voltage divider resistor that are connected in series, the auxiliary winding and a primary-side winding of the transformer are coupled by changing an undotted terminal or changing a dotted terminal, and one terminal of the second voltage divider resistor is connected to the reference ground. The control circuit may obtain a second feedback voltage from a common terminal of the first voltage divider resistor and the second voltage divider resistor. After determining that the auxiliary switching transistor is cut off, the control circuit may determine that a moment at which a value of the second feedback voltage reaches a zero voltage value is the second deadband midpoint moment of the half-bridge midpoint voltage.

With reference to the second aspect, in a feasible implementation, the first voltage threshold is a zero voltage value, and the auxiliary winding and the primary-side winding of the transformer are coupled by changing the undotted terminal. The control circuit may determine that a moment at which it is detected for a first time that the value of the second feedback voltage is less than a fourth voltage threshold is the second moment at which the value of the half-bridge midpoint voltage of the converter reaches a zero voltage value. The fourth voltage threshold is less than the zero voltage value, and a difference between the fourth voltage threshold and the zero voltage value is less than or equal to a third preset difference value.

With reference to the second aspect, in a feasible implementation, the first voltage threshold is a zero voltage value, and the auxiliary winding and the primary-side winding of the transformer are coupled by changing the dotted terminal. The control circuit may determine that a moment at which it is detected for a first time that the value of the second feedback voltage is greater than a fifth voltage threshold is the second moment at which the value of the half-bridge midpoint voltage of the converter reaches a zero voltage value. The fifth voltage threshold is greater than the zero voltage value, and a difference between the fifth voltage threshold and the zero voltage value is less than or equal to a fourth preset difference value.

According to a third aspect, this application further provides a control circuit for a converter. The control circuit may be the control circuit in any one of the first aspect or the feasible implementations of the first aspect.

According to a fourth aspect, this application further provides a terminal device. The terminal device includes a battery and the converter provided in any one of the first aspect or the feasible implementations of the first aspect. In actual work, the converter is configured to charge the battery.

It should be understood that, for implementations and beneficial effects of the foregoing plurality of aspects, refer to each other.

According to the converter and the control method therefor provided in this application, a ZVS control effect of the converter can be improved, and working efficiency of the converter can be improved.

**BRIEF DESCRIPTION OF DRAWINGS**

FIG. 1 is a schematic diagram of a structure of a converter according to this application;
FIG. 2 is a schematic diagram of another structure of a converter according to this application;
FIG. 3 is a diagram of a signal curve of a converter according to this application;
FIG. 4 is a schematic diagram of another structure of a converter according to this application;
FIG. 5 is a diagram of another signal curve of a converter according to this application;
FIG. 6 is a schematic diagram of another structure of a converter according to this application;
FIG. 7 is a schematic diagram of another structure of a converter according to this application;
FIG. 8 is a diagram of another signal curve of a converter according to this application;
FIG. 9 is a schematic diagram of another structure of a converter according to this application;
FIG. 10 is a diagram of another signal curve of a converter according to this application;
FIG. 11 is a schematic diagram of another structure of a converter according to this application;
FIG. 12 is a diagram of another signal curve of a converter according to this application;
FIG. 13 is a schematic diagram of another structure of a converter according to this application;
FIG. 14 is a schematic diagram of another structure of a converter according to this application;
FIG. 15 is a diagram of another signal curve of a converter according to this application;
FIG. 16 is a schematic diagram of another structure of a converter according to this application;
FIG. 17 is a schematic flowchart of a control method for a converter according to this application; and
FIG. 18 is a schematic diagram of a structure of a terminal device according to this application.

**DESCRIPTION OF EMBODIMENTS**

The following clearly and completely describes the technical solutions in embodiments of this application with reference to other accompanying drawings in embodiments of this application.

When an existing asymmetrical half-bridge converter performs ZVS control, a user manually configures a drive delay based on an actual test value of the asymmetrical half-bridge converter, so that the asymmetrical half-bridge converter can conduct a primary switching transistor as much as possible when a half-bridge midpoint voltage of the asymmetrical half-bridge converter is resonant to a peak value or a valley value. However, in such a manner of manually configuring the drive delay, use complexity of the asymmetrical half-bridge converter is high, and a ZVS control effect of the asymmetrical half-bridge converter is poor and working efficiency is low because the manually configured drive delay is inaccurate.

Therefore, a technical problem to be resolved in this application is how to accurately conduct a primary switching transistor of a converter at a resonant peak value or a resonant valley value of a half-bridge midpoint voltage, to improve a ZVS control effect of the converter, and further improve working efficiency of the converter.

To resolve the technical problem, this application provides a converter and a control method therefor. The converter may automatically detect a drive delay generated by a drive circuit, based on a first moment at which a first rising edge of a first drive used to drive a main switch to be conducted is located and a second moment at which a value of a half-bridge midpoint voltage of the converter reaches an input voltage value of the converter or a zero voltage value; and determine, based on the drive delay, a third moment at which the primary switching transistor is conducted next time, and output a second rising edge of the first drive signal at the third moment. The converter provided in this application may accurately detect the drive delay generated by the drive circuit, and may further accurately determine, with reference to the drive delay, a moment at which the primary switching transistor is conducted next time. In this way, a problem that use complexity of an existing converter is high because a drive delay needs to be manually configured. In addition, because a drive delay detected in real time is more accurate, when the second rising edge of the first drive signal is output at the moment determined based on the drive delay, the primary switching transistor can be accurately conducted at a resonant peak value or a resonant valley value of the half-bridge midpoint voltage. In this way, a ZVS control effect of the converter can be improved, and working efficiency of the converter can be improved.

**Embodiment 1**

A converter provided in this application is mainly configured to: convert a received first direct current into a second direct current with a preset voltage value, and output the second direct current. The converter may be applied to the electronic device field, the industrial field (for example, a power adapter of a laser), the aerospace field (for example, an aerospace power supply), and another field. Specifically, the converter provided in this application may serve as a direct current/direct current conversion part in a power adapter of a terminal device (for example, a smartphone, a tablet computer, a notebook computer, a desktop computer, a smart speaker, a smart watch, or a wearable device) and a power converter such as an industrial power supply or an aerospace power supply, to convert a received direct current into a direct current applicable to the terminal device, an industrial device, an aerospace device, or the like. It should be understood that an application scenario of the provided converter is not specifically limited in this application.

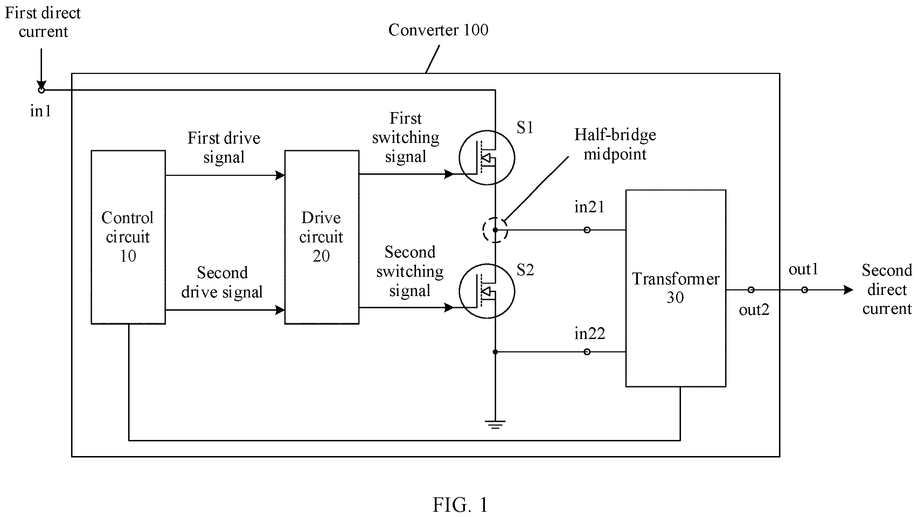

The following provides example descriptions of a structure and an operating principle of the converter provided in this application with reference to FIG. 1 to FIG. 16.

FIG. 1 is a schematic diagram of a structure of a converter according to this application. As shown in FIG. 1, a converter 100 may include a primary switching transistor S1, an auxiliary switching transistor S2, a control circuit 10, and a drive circuit 20. The primary switching transistor S1 and the auxiliary switching transistor S2 are connected in series between an input terminal in1 of the converter 100 and a reference ground. The control circuit 10 is connected to each of the primary switching transistor S1 and the auxiliary switching transistor S2 through the drive circuit 20. Specifically, a first terminal of the primary switching transistor S 1 serves as the input terminal in1 of the converter 100 and is connected to a first direct current, or a first terminal of the primary switching transistor S1 is connected to the input terminal in1 that is of the converter 100 and that is connected to a first direct current. It should be understood that, FIG. 1 shows a manner in which the first terminal of the primary switching transistor S1 is connected to the input terminal in1 of the converter 100. A second terminal of the primary switching transistor S1 is connected to a first terminal of the auxiliary switching transistor S2, and a half-bridge midpoint voltage of the converter 100 is a voltage of a connecting point between the second terminal of the primary switching transistor S 1 and the first terminal of the auxiliary switching transistor S2 relative to the reference ground. A second terminal of the auxiliary switching transistor S2 is connected to the reference ground. One terminal of the control circuit 10 is connected to a third terminal of the primary switching transistor S1 through the drive circuit 20, and the other terminal of the control circuit 10 is connected to a third terminal of the auxiliary switching transistor S2 through the drive circuit 20. Further, the converter 100 further includes a transformer 30. A first input terminal in21 of the transformer 30 is connected to the first terminal of the auxiliary switching transistor S2, and the second input terminal in22 of the transformer 30 and the second terminal of the auxiliary switching transistor S2 are connected and are both connected to the reference ground. An output terminal out2 of the transformer 30 is connected to an output terminal out1 that is of the converter 100 and that is used to output a second direct current.

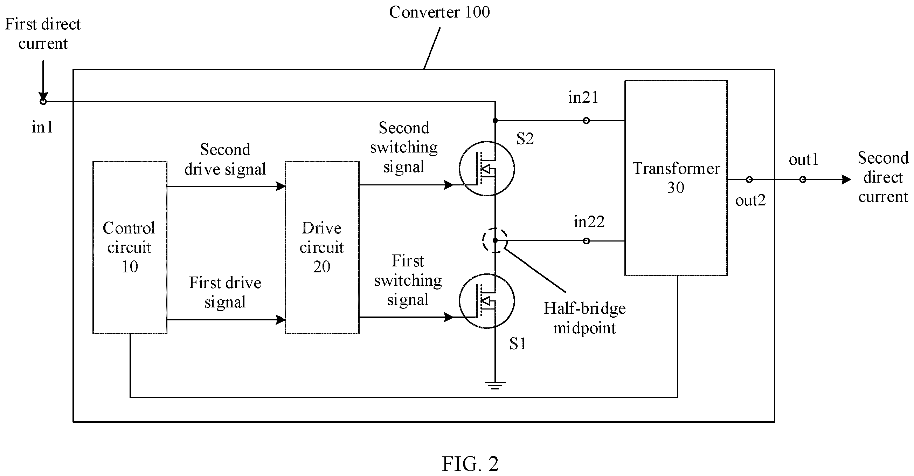

It should be understood that, FIG. 1 shows a case in which the primary switching transistor S 1 is directly connected to the first direct current and the auxiliary switching transistor S2 is directly connected to the reference ground. However, in an actual implementation, locations of the primary switching transistor S1 and the auxiliary switching transistor S2 in the converter 100 may be changed. In other words, the auxiliary switching transistor S2 may be directly connected to the first direct current, and the primary switching transistor S 1 may be directly connected to the reference ground. FIG. 2 is a schematic diagram of another structure of a converter according to this application. As shown in FIG. 2, the first terminal of the auxiliary switching transistor S2 serves as the input terminal in1 of the converter 100 and is connected to the first direct current, or the first terminal of the auxiliary switching transistor S2 is connected to the input terminal in1 that is of the converter 100 and that is connected to the first direct current. It should be understood that, FIG. 2 shows a manner in which the first terminal of the auxiliary switching transistor S2 is connected to the input terminal in1 of the converter 100. The second terminal of the auxiliary switching transistor S2 is connected to the first terminal of the primary switching transistor S1, and the half-bridge midpoint voltage of the converter 100 is a voltage of a connecting point between the first terminal of the primary switching transistor S 1 and the second terminal of the auxiliary switching transistor S2 relative to the reference ground. The second terminal of the primary switching transistor S1 is connected to the reference ground. The first input terminal in21 of the transformer 30 is connected to the first terminal of the auxiliary switching transistor S2, and the second input terminal in22 of the transformer 30 is connected to both the second terminal of the auxiliary switching transistor S2 and the first terminal of the primary switching transistor S1. The output terminal out2 of the transformer 30 is connected to the output terminal out1 that is of the converter 100 and that is used to output the second direct current.

For ease of understanding, the following first briefly describes a working process of the converter 100 with reference to the structures shown in FIG. 1 and FIG. 2.

In actual work, after the converter 100 is powered on, the control circuit 10 may generate a first drive signal used to conduct or cut off the primary switching transistor S1, and send the first drive signal to the drive circuit 20. The drive circuit 20 is configured to: perform filtering, amplification, or the like on the first drive signal to obtain a corresponding first switching signal, and send the first switching signal to the third terminal of the primary switching transistor S1, so that the primary switching transistor S1 can be directly conducted or cut off under control of the first switching signal. In this embodiment of this application, the first drive signal is a pulse signal, a high level of the first drive signal is used to conduct the primary switching transistor S 1, and a low level of the first drive signal is used to cut off the primary switching transistor S 1. In other words, a rising edge of the first drive signal is used to trigger the primary switching transistor S1 to be conducted, and a falling edge of the first drive signal is used to trigger the primary switching transistor S1 to be cut off. The first switching signal obtained by processing the first drive signal is also a pulse signal, and has a same frequency and duty cycle as the first drive signal. A main difference lies in that a voltage value corresponding to a high level included in the first switching signal is larger. In this case, the first switching signal can directly act on the third terminal of the primary switching transistor S 1, to conduct or cut off the primary switching transistor S1. In other words, the first drive signal is a pulse signal that is output by the control circuit 10 and whose function is to conduct or cut off the primary switching transistor S1, and the first switching signal is a pulse signal that is actually received by the third terminal of the primary switching transistor S1 and that can be used to directly control the primary switching transistor S1 to be conducted or cut off. The control circuit 10 may generate a second drive signal used to conduct or cut off the auxiliary switching transistor S2, and send the second drive signal to the drive circuit 20. The drive circuit 20 is configured to: perform filtering, amplification, or the like on the second drive signal to obtain a second switching signal, and send the second switching signal to the third terminal of the auxiliary switching transistor S2, so that the auxiliary switching transistor S2 can be directly conducted or cut off under control of the second switching signal. In this embodiment of this application, the second drive signal is a pulse signal, a high level of the second drive signal is used to conduct the auxiliary switching transistor S2, and a low level of the second drive signal is used to cut off the auxiliary switching transistor S2. In other words, a rising edge of the auxiliary switching transistor S2 is used to trigger the auxiliary switching transistor S2 to be conducted, and a falling edge of the auxiliary switching transistor S2 is used to trigger the auxiliary switching transistor S2 to be cut off. The second switching signal obtained by processing the second drive signal is also a pulse signal, and has a same frequency and duty cycle as the second drive signal. A main difference lies in that a voltage value corresponding to a high level included in the second switching signal is larger. In this case, the second switching signal can directly act on the third terminal of the auxiliary switching transistor S2, to conduct or cut off the auxiliary switching transistor S2. In other words, the second drive signal is a pulse signal that is output by the control circuit 10 and whose function is to conduct or cut off the auxiliary switching transistor S2, and the second switching signal is a pulse signal that is actually received by the third terminal of the auxiliary switching transistor S2 and that can be used to directly control the auxiliary switching transistor S2 to be conducted or cut off. It should be noted that, in this embodiment of this application, the primary switching transistor S 1 and the auxiliary switching transistor S2 are alternately conducted and cut off. For example, the primary switching transistor S 1 and the auxiliary switching transistor S2 are alternately conducted and cut off for one time. The control circuit 10 may control the first drive signal to maintain a high level in a time period [e1, e2] and maintain a low level in a time period [e2, e3], so that the primary switching transistor S1 is conducted in the time period [e1, e2] and is cut off in the time period [e2, e3]. Meanwhile, the control circuit 10 may control the second drive signal to maintain a low level in a time period [e4, e5], where the moment e4 is before the moment e1, and the moment e5 is after the moment e2, to ensure that the second drive signal is in an off state in the time period [e4, e5]. The control circuit 10 may further control the second drive signal to maintain a high level in a time period [e5, e6], where the moment e6 is before the moment e3, to ensure that the second drive signal is in an off state in the time period [e5, e6]. In this way, the primary switching transistor S1 and the auxiliary switching transistor S2 can be alternately conducted and cut off. It should be further noted herein that, in this embodiment of this application, a time period in which the primary switching transistor S1 and the auxiliary switching transistor S2 are both cut off is referred to as a dead time of the converter 100. The primary switching transistor S1 and the auxiliary switching transistor S2 are alternately conducted or cut off, to convert the first direct current connected to the converter 100 into a first alternating current, and provide the first alternating current to the transformer 30, so that the first transformer 30 converts the first alternating current into a second alternating current with a preset valid value. Then, the converter 100 may convert the second alternating current into a second direct current with a preset voltage value by using a rectifier component (not shown in FIG. 1 and FIG. 2) included in the converter 100, and output the second direct current.

In a process of controlling the primary switching transistor S1 to be conducted and cut off, the control circuit 10 may be configured to obtain a first moment (assumed to be t1) at which a first rising edge of the first drive signal is located. The control circuit 10 may be further configured to obtain a second moment (assumed to be t2 herein) at which a value of the half-bridge midpoint voltage of the converter reaches a preset first voltage threshold. The first voltage threshold is an input voltage value (that is, a voltage value of the first direct current, which is assumed to be vin herein) of the converter 100 or a zero voltage value (that is, 0). It should be noted that, when the converter 100 is of the structure shown in FIG. 1, the first voltage threshold is equal to the input voltage value vin. When the converter 100 is of the structure shown in FIG. 2, the first voltage threshold is equal to the zero voltage value. The control circuit 10 may be further configured to determine a difference between the second moment t2 and the first moment t1 as a drive delay (assumed to be td herein) corresponding to the drive circuit 20. It should be understood that, when a topology structure of the drive circuit 20 remains unchanged, the drive delay corresponding to the drive circuit 20 does not change. The control circuit 10 is further configured to: determine, based on the drive delay, a third moment (assumed to be t3 herein) at which the control circuit 10 conducts the primary switching transistor S1 next time, and output a second rising edge of the first drive signal to the drive circuit 20 at the third moment t3. It should be understood that, the second rising edge is a rising edge that is closest to the first rising edge and that is after the first rising edge, and the second rising edge is used to trigger the primary switching transistor S1 to be conducted again. It should be additionally noted that, a generation moment (that is, a moment at which the control circuit 10 cuts off the primary switching transistor S1 subsequently, which is assumed to be t16 herein) of a first falling edge after the first rising edge of the first drive signal may be determined by the control circuit 10 based on a preset frequency and a duty cycle of the first drive signal, and the control circuit 10 may output the first falling edge of the first drive signal at the moment t16. A moment t17 at which a third rising edge corresponding to the second drive signal in a cut-off period of the primary switching transistor S1 is located and a moment t18 at which a second falling edge corresponding to the second drive signal in the cut-off period of the primary switching transistor S1 is located (that is, a moment 117 at which the control circuit 10 conducts the auxiliary switching transistor S2 in the cut-off period of the primary switching transistor S1 and a moment 118 at which the control circuit 10 cuts off the auxiliary switching transistor S2) may be determined by the control circuit 10 based on a preset association relationship between the first drive signal and the second drive signal. In addition, the control circuit 10 may output the third rising edge of the second drive signal at the moment 117, and output the second falling edge of the second drive signal at the moment t18. Therefore, the control circuit 10 controls each of the primary switching transistor S1 and the auxiliary switching transistor S2 to be conducted and cut off for one time, and determines a specific moment at which the control circuit 10 conducts the primary switching transistor S1 next time.

In the foregoing implementation, the converter 100 may accurately detect, by using the control circuit 10, the drive delay generated by the drive circuit 20, and may further accurately determine, with reference to the drive delay, the third moment t3 at which the control circuit 10 conducts the primary switching transistor S1 again. In this way, a problem that use complexity of an existing converter is high because the drive delay needs to be manually configured. In addition, because a drive delay detected in real time is more accurate, when the second rising edge of the first drive signal is output at the third moment t3 determined based on the drive delay, it can be ensured that the primary switching transistor S1 is accurately conducted at a resonant peak value or a resonant valley value of the half-bridge midpoint voltage. Because zero voltage conduction of the primary switching transistor S 1 can be ensured when it is ensured that the primary switching transistor S 1 is accurately conducted at the resonant peak value or the resonant valley value of the half-bridge midpoint voltage, and a cut-off moment of the primary switching transistor S 1 and a conduction moment and a cut-off moment of the auxiliary switching transistor S2 are determined based on a conduction moment of the primary switching transistor S1, control of zero voltage cut-off of the primary switching transistor S1 and zero voltage conduction and zero voltage cut-off of the auxiliary switching transistor S2 can also be further ensured when the third moment t3 is accurately found. Therefore, an overall ZVS control effect of the converter 100 can be improved when the third moment t3 is accurately found, to improve working efficiency of the converter 100.

It should be understood that, in this embodiment of this application, the primary switching transistor S1 and the auxiliary switching transistor S2 each may be a field-effect transistor (field-effect transistor, FET) made of a silicon semiconductor material (silicon, Si), silicon carbide (silicon carbide, SiC) or gallium nitride (gallium nitride, GaN) in a third-generation wide-bandgap semiconductor material, or the like. For ease of description, in this embodiment, the primary switching transistor S1 and the auxiliary switching transistor S2 are described by using a metal-oxide-semiconductor field-effect transistor (metal-oxide-semiconductor field-effect transistor, MOSFET) as an example. The following describes in detail structures and functions of components in the converter 100 in two different implementation scenarios in which the converter 100 is of the structure shown in FIG. 1 and the structure shown in FIG. 2.

Implementation scenario 1:

In Implementation scenario 1, the converter 100 is of the structure shown in FIG. 1. The first voltage threshold is the input voltage value vin of the converter 100.

In some optional implementations, the control circuit 10 is configured to determine a fourth moment (assumed to be t4 herein) at which the half-bridge midpoint voltage of the converter 100 reaches the resonant peak value. Then, the control circuit 10 may be configured to determine the third moment t3 based on the fourth moment t4 and the previously determined drive delay td. The third moment t3 is before the fourth moment t4, and a time difference between the third moment t3 and the fourth moment t4 is the drive delay td. In other words, the third moment t3 is equal to the fourth moment t4 minus the drive delay td. It should be noted that, in this implementation scenario, the half-bridge midpoint voltage is periodically resonant, and always jumps to the input voltage value vin after reaching the resonant peak value. Usually, in a process in which the primary switching transistor S1 and the auxiliary switching transistor S2 each are conducted and cut off for one time, the half-bridge midpoint voltage is resonant for one time, and is usually resonant after the auxiliary switching transistor S2 is cut off. In addition, a resonance period of the half-bridge midpoint voltage is fixed, the resonant peak value is not fixed, and the resonant peak value of the half-bridge midpoint voltage is determined based on conduction duration of the auxiliary switching transistor S2. Longer conduction duration of the auxiliary switching transistor S2 indicates that the resonant peak value is closer to the input voltage value vin.

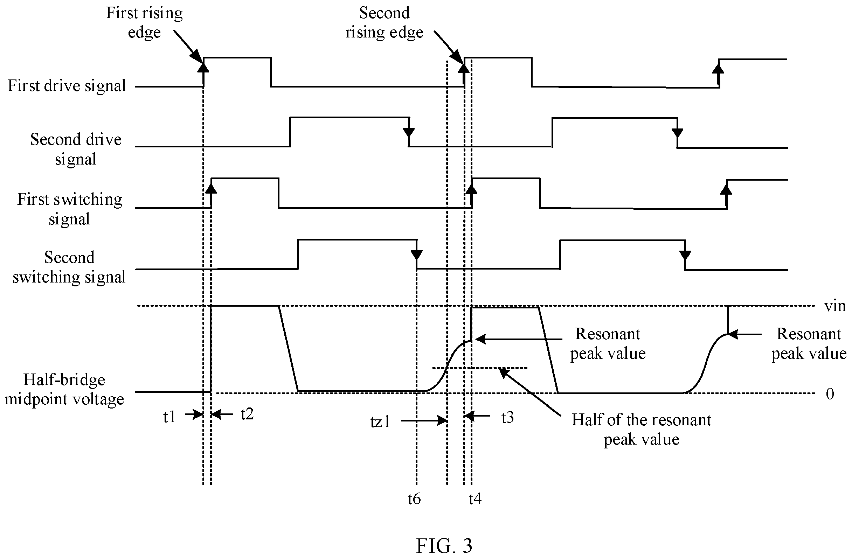

For example, FIG. 3 is a diagram of a signal curve of a converter according to this application. FIG. 3 shows time-domain change curves of the first drive signal, the second drive signal, the first switching signal, the second switching signal, and the half-bridge midpoint voltage. As shown in FIG. 3, t6 is a moment at which a falling edge of the second switching signal is located. After the moment t6 (that is, after the auxiliary switching transistor S2 is cut off), the half-bridge midpoint voltage is resonant, gradually increases from a zero voltage value, reaches the resonant peak value of the half-bridge midpoint voltage at the fourth moment t4, and further jumps to the input voltage value vin. The control circuit 10 may be configured to: determine the first moment t1 and the second moment t2, and then determine a difference between the first moment t1 and the second moment t2 as the drive delay td. Then, the control circuit 10 may predict the fourth moment t4 at which the half-bridge midpoint voltage is resonant from the zero voltage value to the resonant peak value, and determine a difference between the fourth moment t4 and the drive delay td as the third moment t3 at which the control circuit 10 conducts the primary switching transistor S1 next time. It should be noted that, FIG. 3 is shown by using, as an example, a scenario in which the first rising edge is a 1st rising edge of the first drive signal (or by using, as an example, a scenario in which the control circuit 10 controls, for a first time, the primary switching transistor S1 and the auxiliary switching transistor S2 to be conducted and cut off). In this scenario, before the primary switching transistor S1 is really conducted, the value of the half-bridge midpoint voltage is the zero voltage value. In an actual implementation, the first rising edge may alternatively be any rising edge after the 1st rising edge of the first drive signal, or the first rising edge is a rising edge of the first drive signal output by the control circuit 10 when the entire converter 100 has reached a steady state. In this scenario, before the primary switching transistor S1 is really conducted, the value of the half-bridge midpoint voltage needs to be a resonant peak value corresponding to a previous resonance. Because working principles of the converter 100 are the same in the two different scenarios, the following provides collective descriptions by using, as an example, the scenario in which the first rising edge is the 1st rising edge of the first drive signal.

Because there is a drive delay td in the drive circuit, there is a drive delay td between rising edges or falling edges corresponding to the first drive signal and a first switching signal actually received by the primary switching transistor S1. Therefore, when a 2nd rising edge of the first drive signal is output at the third moment t3 determined with reference to the drive delay td and the fourth moment t4 at which the resonant peak value of the half-bridge midpoint voltage occurs, it can be ensured that a rising edge of the first switching signal just occurs at the fourth moment t4, so that the primary switching transistor S1 can be just conducted at the fourth moment t4, the primary switching transistor S1 can be accurately conducted at the resonant peak value of the half-bridge midpoint voltage, and a ZVS control effect of the converter 100 can be improved.

In some feasible implementations, the control circuit 10 may obtain a first deadband midpoint moment (assumed to be tz1 herein) corresponding to the half-bridge midpoint voltage. As shown in FIG. 3, a value of the half-bridge midpoint voltage at the first deadband midpoint moment tz1 is a half of the resonant peak value of the half-bridge midpoint voltage. In addition, the first deadband midpoint moment tz1 is also one quarter of a resonance period of the half-bridge midpoint voltage. Then, the control circuit 10 may determine, based on the first deadband midpoint moment tz1 and one quarter of the resonance period of the half-bridge midpoint voltage, the fourth moment t4 at which the half-bridge midpoint voltage reaches the resonant peak value. Specifically, the control circuit may determine a sum of the first deadband midpoint moment tz1 and one quarter of the resonance period of the half-bridge midpoint voltage as the fourth moment t4.

In some feasible implementations, the transformer 30 may further include an auxiliary winding, a first voltage divider resistor, and a second voltage divider resistor that are connected in series. One terminal of the first voltage divider resistor is connected to one terminal of the auxiliary winding, the other terminal of the first voltage divider circuit is connected to one terminal of the second voltage divider resistor, and the other terminal of the second voltage divider resistor and the other terminal of the auxiliary winding are both connected to the reference ground. Herein, there are two different coupling manners between the auxiliary winding and the primary-side winding of the transformer 30. In other words, the auxiliary winding and the primary-side winding of the transformer 30 are coupled by changing an undotted terminal, or the auxiliary winding and the primary-side winding of the transformer 30 are coupled by changing a dotted terminal. In this embodiment of this application, the auxiliary winding and the primary-side winding of the transformer 30 are coupled by changing the undotted terminal. In other words, the auxiliary winding and the primary-side winding of the transformer 30 are coupled to a same iron core, and an undotted terminal on one side is close to a dotted terminal on the other side. The auxiliary winding and the primary-side winding of the transformer 30 are coupled by changing the dotted terminal. In other words, the auxiliary winding and the primary-side winding of the transformer 30 are coupled to a same iron core, and two dotted terminals of the auxiliary winding and the primary-side winding of the transformer 30 are close to each other. Because the two different coupling manners lead to a difference in a process in which the converter 100 detects the drive delay td and determines the third moment t3, the following further describes a structure and a function of the converter 100 with reference to the two different coupling manners.

Coupling manner 1:

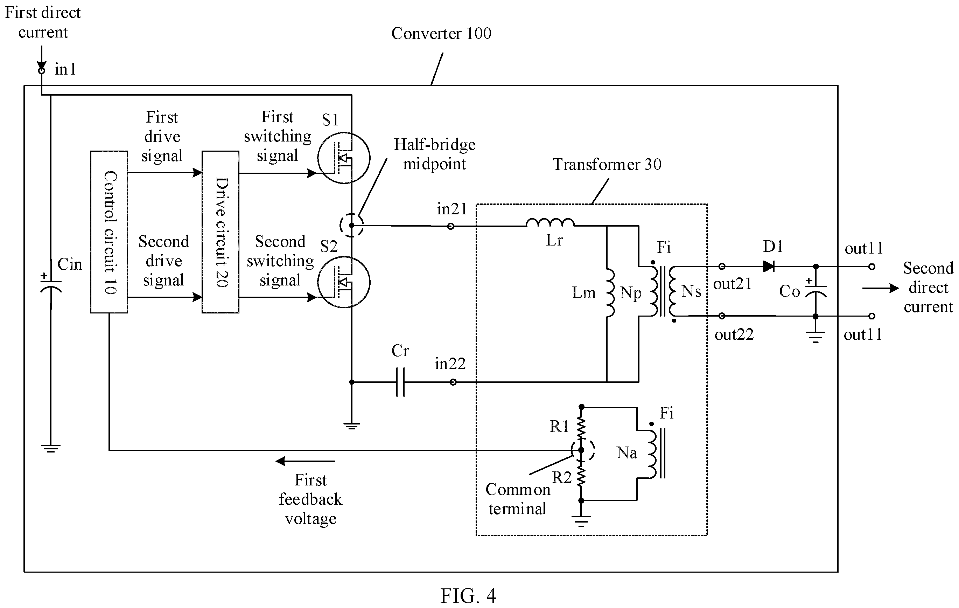

FIG. 4 is a schematic diagram of another structure of a converter according to this application. FIG. 4 shows a form in which the auxiliary winding and the primary-side winding are coupled by changing the undotted terminal.

As shown in FIG. 4, the transformer 30 (which may also be referred to as a flyback transformer) may include a resonant inductor Lr (including a leakage inductor and an external inductor of the transformer 30, which may be both integrated into the transformer 30), an excitation inductor Lm, a primary-side winding Np, a secondary-side winding Ns, an iron core Fi, an auxiliary winding Na, a first voltage divider voltage R1, and a second voltage divider resistor R2. It should be understood that, in an actual implementation, the first voltage divider voltage R1 and the second voltage divider resistor R2 may not be included in the transformer 30. In addition, the converter may further include a resonant capacitor Cr, a rectifier diode D1, an output capacitor Co, and an input capacitor Cin.

The input capacitor Cin is disposed between the input terminal in1 of the converter 100 and the reference ground. A drain of the primary switching transistor S1 serves as the first terminal of the primary switching transistor S1 and is connected to the input terminal in1 of the converter 100, a source of the primary switching transistor S1 serves as the second terminal of the primary switching transistor S 1 and is connected to a drain of the auxiliary switching transistor S2 (that is, the first terminal of the auxiliary switching transistor S2), and a source of the auxiliary switching transistor S2 serves as the second terminal of the auxiliary switching transistor S2 and is connected to the reference ground. A gate of the primary switching transistor S 1 serves as the third terminal of the primary switching transistor S 1 and is connected to the drive circuit 20, and a gate of the auxiliary switching transistor S2 serves as a second terminal of the auxiliary switching transistor S2 and is connected to the drive circuit 20.

An input terminal in2 of the transformer 30 includes the first input terminal in21 and the second input terminal in22, and the output terminal out2 of the transformer 30 includes a first output terminal out21 and a second output terminal out22. One terminal of the resonant inductor Lr is connected to the drain of the auxiliary switching transistor S2 by using or by serving as the first input terminal in21 of the transformer 30, the other terminal of the resonant inductor Lr is connected to a dotted terminal of the primary-side winding Np, an undotted terminal of the primary-side winding Np is connected to one terminal of the resonant capacitor Cr by using or by serving as the second input terminal in22 of the transformer 30, the other terminal of the resonant capacitor Cr is connected to the source of the auxiliary switching transistor S2, and the excitation inductor Lm is connected to the primary-side winding Np in parallel. An undotted terminal and a dotted terminal of the secondary-side winding Ns are respectively connected to the first output terminal out21 and the second output terminal out22 of the transformer 30. The primary-side winding Np and the secondary-side winding Ns are both coupled to the iron core Fi. Optionally, the resonant inductor Lr may not be included in the transformer 30.

The output terminal out1 of the converter 100 includes the first output terminal out11 and the second output terminal out12, and is configured to output the second direct current. The first output terminal out21 of the transformer 30 is connected to the first output terminal out11 of the converter 100 through the rectifier diode D1, and the second output terminal out22 of the transformer 30 is connected to the second output terminal out12 of the converter 100 and the reference ground. The output capacitor Co is further disposed between the first output terminal out11 and the second output terminal out12 of the converter 100.

The auxiliary winding Na, the first voltage divider resistor R1, and the second voltage divider resistor R2 are connected to each other in series. One terminal of the first voltage divider resistor R1 is connected to a dotted terminal of the auxiliary winding Na, and the other terminal of the first voltage divider resistor R1 is connected to one terminal of the second voltage divider resistor R2 to form a common terminal of the first voltage divider resistor R1 and the second voltage divider resistor R2. The other terminal of the second voltage divider resistor R2 and an undotted terminal of the auxiliary winding Na are connected, and are both connected to the reference ground. The auxiliary winding Na and the primary-side winding Np are both coupled to the iron core Fi, and the dotted terminal of the auxiliary winding Na is close to the undotted terminal of the primary-side winding Np. The common terminal of the first voltage divider resistor R1 and the second voltage divider resistor R2 is connected to the control circuit 10, and the control circuit 10 may obtain a first feedback voltage from the common terminal of the first voltage divider resistor R1 and the second voltage divider resistor R2. In other words, the first feedback voltage is a voltage of the common terminal of the first voltage divider resistor R1 and the second voltage divider resistor R2 relative to the reference ground. The first feedback voltage may accurately reflect a change situation of the half-bridge midpoint voltage.

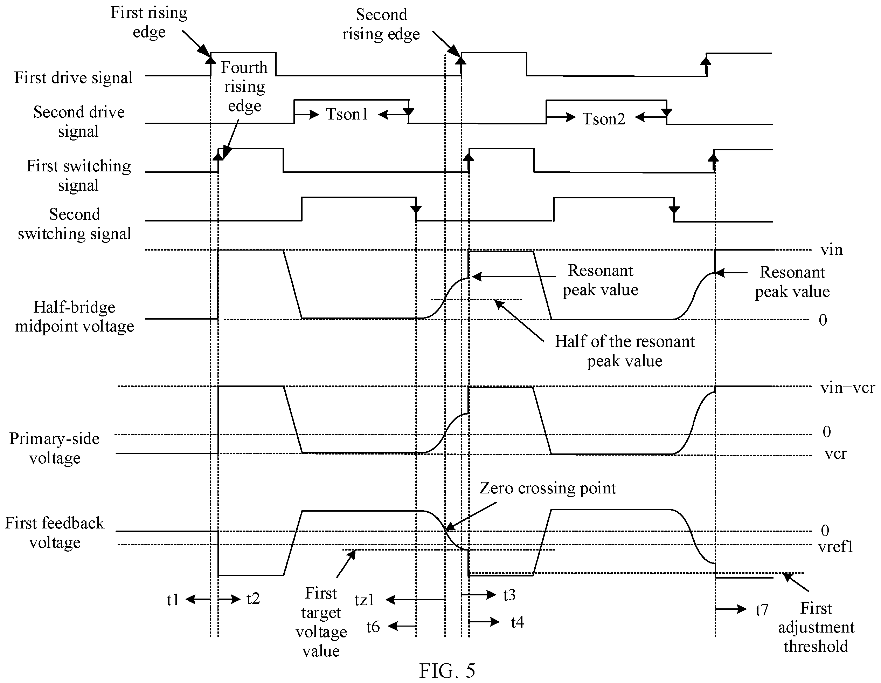

FIG. 5 is a diagram of another signal curve of a converter according to this application. FIG. 5 further shows change curves of a terminal voltage (briefly referred to as a primary-side voltage) of the primary-side winding Np and the first feedback voltage obtained from the common terminal of the first voltage divider resistor R1 and the second voltage divider resistor R2 when the converter 100 is of the structure shown in FIG. 4. With reference to the curves shown in FIG. 5, it should be understood that, at a moment at which the primary switching transistor S1 receives a fourth rising edge of the first switching signal, the value of the half-bridge midpoint voltage gradually changes from the zero voltage value to the input voltage value vin, and correspondingly, a value of the first feedback voltage gradually changes from zero to a minimum value vmin1 of the first feedback voltage. It should be understood that, in the structure shown in FIG. 4, there is a fixed relationship between the value of the first feedback voltage and the value of the half-bridge midpoint voltage. The minimum value vmin1 of the first feedback voltage satisfies $vmin = -(vin - vcr) \times \frac{r2}{r1+r2} \times \frac{na}{np}$ . Herein, *ver* is a terminal voltage value of the resonant capacitor Vcr, r2 is a resistance value of the second voltage divider resistor R2, r1 is a resistance value of the first voltage divider resistor r1, na is a quantity of turns of the auxiliary winding Na, and np is a quantity of turns of the primary-side winding Np. A maximum value vmax1 of the first feedback voltage satisfies $vmax1 = vcr \times \frac{r2}{r1+r2} \times \frac{na}{np}$ .

In some feasible implementations, after detecting the first moment t1 at which the first rising edge is located, the control circuit 10 may be further configured to: obtain the first feedback voltage from the common terminal of the first voltage divider resistor R1 and the second voltage divider resistor R2, and determine in real time whether the value of the first feedback voltage is less than a preset second voltage threshold (assumed to be vref1). The second voltage threshold vref1 is less than a zero voltage value, and a difference between the second voltage threshold vref1 and the zero voltage value is less than or equal to a first preset difference value. Further, the control circuit 10 may determine that a moment at which the control circuit 10 detects for a first time that the value of the first feedback voltage is less than the second voltage threshold vref1 is the second moment t2 at which the value of the half-bridge midpoint voltage of the converter 100 reaches the input voltage value vin.

Because the value of the half-bridge midpoint voltage gradually increases to the input voltage value vin only after the primary switching transistor S1 is really conducted, if a moment at which the value of the half-bridge midpoint voltage really reaches the input voltage value vin is determined as a second moment at which the primary switching transistor S1 is really conducted, the detected second moment t2 is reached after a delay generated in a process in which the half-bridge midpoint voltage gradually changes is introduced, and the detected second moment t2 is inaccurate. However, in the foregoing implementation, the control circuit 10 determines, by detecting the moment at which the value of the first feedback voltage reaches, for a first time, the second voltage threshold vref1 less than the zero voltage value, a moment at which the value of the half-bridge midpoint voltage increases to the input voltage value vin, to indirectly determine the moment t2 at which the primary switching transistor S1 is really conducted. The second voltage threshold vrefl slightly less than the zero voltage value is used as a condition for determining the second moment t2 at which the primary switching transistor S 1 is really conducted, to effectively reduce a detection delay generated in the process in which the half-bridge midpoint voltage gradually changes, and ensure accuracy of the detected second moment t2.

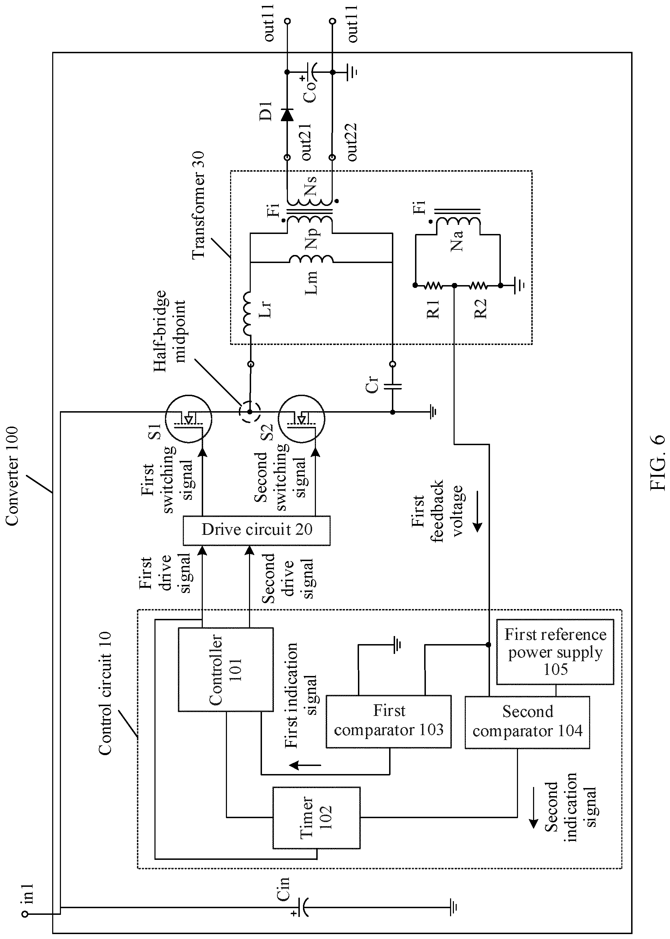

Further, in an optional implementation, FIG. 6 is a schematic diagram of another structure of a converter according to this application. As shown in FIG. 6, the control circuit 10 may include a controller 101, a timer 102, and a second comparator 104. A first terminal of the second comparator 104 is connected to the common terminal of the first voltage divider resistor R1 and the second voltage divider resistor R2, and a second terminal of the second comparator 104 is connected to a first reference voltage source 105. A voltage value of the first reference voltage source 105 is the second voltage threshold vrefl. A third terminal of the second comparator 104 is connected to a first terminal of the timer 102, a second terminal of the timer 102 is connected to a second terminal that is of the controller 101 and that outputs the first drive signal, and a third terminal of the timer 102 is connected to a third terminal of the controller 101. The second terminal of the controller 101 is further connected to the drive circuit 20, and a fourth terminal of the controller 101 is also connected to the drive circuit 20.

In actual work, the controller 101 may be configured to: generate the first drive signal, and send the first drive signal to the drive circuit 20 through the second terminal of the controller 101. The controller 101 may be further configured to: generate the second drive signal, and send the second drive signal to the drive circuit 20 through the fourth terminal of the controller 101. The timer 102 may be configured to: determine that a moment at which the timer 102 detects the first rising edge is the first moment t1, and start timing at the first moment t1. The second comparator 104 is configured to: obtain the first feedback voltage, and detect in real time whether the value of the first feedback voltage is less than the second voltage threshold vrefl. The second comparator 104 is further configured to send a second indication signal to the timer 102 when it is detected for the first time that the value of the first feedback voltage is less than the second voltage threshold vrefl. Optionally, the second comparator 104 is a common analog comparator. When a positive phase terminal of the second comparator is connected to the second voltage threshold vrefl, and a negative phase terminal is connected to the first feedback voltage, the second indication signal is a rising edge. When the positive phase terminal of the second comparator is connected to the first feedback voltage, and the negative phase terminal is connected to the second voltage threshold vrefl, the second indication signal is a falling edge. The timer 102 is further configured to: determine that a moment at which the second indication signal is detected is the second moment t2, and stop timing at the second moment t2. The controller 101 is further configured to: obtain timing duration of the timer 102, and determine the timing duration as the drive delay td.

In the foregoing implementation, the control circuit 10 detects the drive delay td by using an analog device such as the timer 102 and the second comparator 104, to avoid a requirement generated for an analog-to-digital converter and a digital-to-analog converter when digital logic processing is performed, and simplify a structure of the control circuit 10.

With reference to FIG. 5, it should be understood that, in a time period in which the auxiliary switching transistor S2 is cut off, when the value of the first feedback voltage is the zero voltage value, the value of the half-bridge midpoint voltage just reaches a half of the resonant peak value of the half-bridge midpoint voltage. In some feasible implementations, the control circuit 10 may be configured to obtain the first feedback voltage from the common terminal of the first voltage divider resistor R1 and the second voltage divider resistor R2. The control circuit 10 may be further configured to: after determining that the auxiliary switching transistor S2 is cut off, determine that a detected moment at which the value of the first feedback voltage reaches the zero voltage value is the first deadband midpoint moment tz1 of the half-bridge midpoint voltage.

In the foregoing implementation, the first deadband midpoint moment tz1 of the half-bridge midpoint voltage is detected by performing zero-crossing detection on the first feedback voltage. This manner is simple and reliable, may ensure detection efficiency and accuracy of the first deadband midpoint moment tz1, and may ensure detection efficiency and accuracy of the fourth moment t4.

Further, in a feasible implementation, as shown in FIG. 6, the control circuit 10 may further include a first comparator 103. A first terminal of the first comparator 103 is connected to the common terminal of the first voltage divider resistor R1 and the second voltage divider resistor R2. A second terminal of the first comparator 103 is connected to the reference ground, and a third terminal of the first comparator 103 is connected to a first terminal of the controller 101.

In actual work, the first comparator 103 is configured to: obtain the first feedback voltage from the common terminal of the first voltage divider resistor R1 and the second voltage divider resistor R2, and send the first indication signal to the controller 101 when it is detected that the value of the first feedback voltage is equal to the zero voltage value. Optionally, the first comparator 103 is a common analog comparator. When a positive phase terminal of the first comparator 103 is connected to the reference ground, and a negative phase terminal is connected to the first feedback voltage, the first indication signal is a falling edge. When the positive phase terminal of the first comparator 103 is connected to the first feedback voltage, and the negative phase terminal is connected to the reference ground, the second indication signal is a rising edge. After determining that the auxiliary switching transistor S2 is cut off, the controller 101 is configured to determine that a moment at which the first indication signal is detected is the first deadband midpoint moment tz1 of the half-bridge midpoint voltage.

In the foregoing implementation, the control circuit 10 detects the first deadband midpoint moment tz1 by using an analog device such as the first comparator 103, to avoid a requirement generated for an analog-to-digital converter or a digital-to-analog converter when digital logic processing is performed, and simplify a structure of the control circuit 10.

It should be understood that, for the converter 100, it not only needs to be ensured that the primary switching transistor S1 is conducted at the resonant peak value of the half-bridge midpoint voltage, but also needs to be ensured that the resonant peak value of the half-bridge midpoint voltage is close to the input voltage vin of the half-bridge midpoint voltage as much as possible. In this way, it can be ensured that the primary switching transistor S 1 can implement ZVS, to ensure an overall ZVS control effect of the converter 100.

In some feasible implementations, when outputting the second rising edge, the control circuit 10 may be further configured to obtain a value of the first feedback voltage at the fourth moment t4 (for ease of distinguishing, the first target voltage value is used as a substitute for description below). Then, the control circuit 10 may compare the first target voltage value with a preset first adjustment threshold. The first adjustment threshold is a product of the minimum value vmin1 of the first feedback voltage and a first preset coefficient, and the first preset coefficient is greater than or equal to 0. 75 and is less than or equal to 0. 9. If the control circuit 10 determines that the first target voltage value is less than or equal to the first adjustment threshold, next conduction duration of the auxiliary switching transistor S2 may be reduced. If the control circuit 10 determines that the first target voltage value is greater than the first adjustment threshold, next conduction duration of the auxiliary switching transistor S2 may be increased. It should be noted that, when the control circuit 10 determines that the first target voltage value is less than or equal to the first adjustment threshold, it indicates that a resonant peak value of the half-bridge midpoint voltage at the fourth moment t4 has reached a requirement, and a next resonant peak value needs to be slightly reduced. The resonant peak value of the half-bridge midpoint voltage is controlled based on the conduction duration of the auxiliary switching transistor, and longer conduction duration of the auxiliary switching transistor S2 indicates that the resonant peak value of the half-bridge midpoint voltage is closer to the input voltage vin, and the value of the first feedback voltage is closer to the minimum value vin of the first feedback voltage. Therefore, when the control circuit 10 determines that the first target voltage value is less than or equal to the first adjustment threshold, it indicates that a next resonant peak value of the half-bridge midpoint voltage needs to be reduced, and next conduction duration of the auxiliary switching transistor S2 may be reduced. If the control circuit 10 determines that the first target voltage value is greater than the first adjustment threshold, it indicates that a next resonant peak value of the half-bridge midpoint voltage needs to be increased, and next conduction duration of the auxiliary switching transistor S2 may be increased. For example, as shown in FIG. 5, the control circuit 10 may obtain the first target voltage value of the first feedback voltage at the fourth moment t4. Then, if the control circuit 10 determines that the first target voltage value is greater than the first adjustment threshold, next conduction duration of the auxiliary switching transistor S2 may be increased, so that a conduction time period Tson2 of the auxiliary switching transistor S2 is greater than a conduction time period Tson1. In this way, a value of the first feedback voltage at a subsequent seventh moment t7 can be closer to the first adjustment threshold than the first target voltage value. Herein, the seventh moment t7 is a moment at which the half-bridge midpoint voltage reaches the resonant peak value next time.

Coupling manner 2:

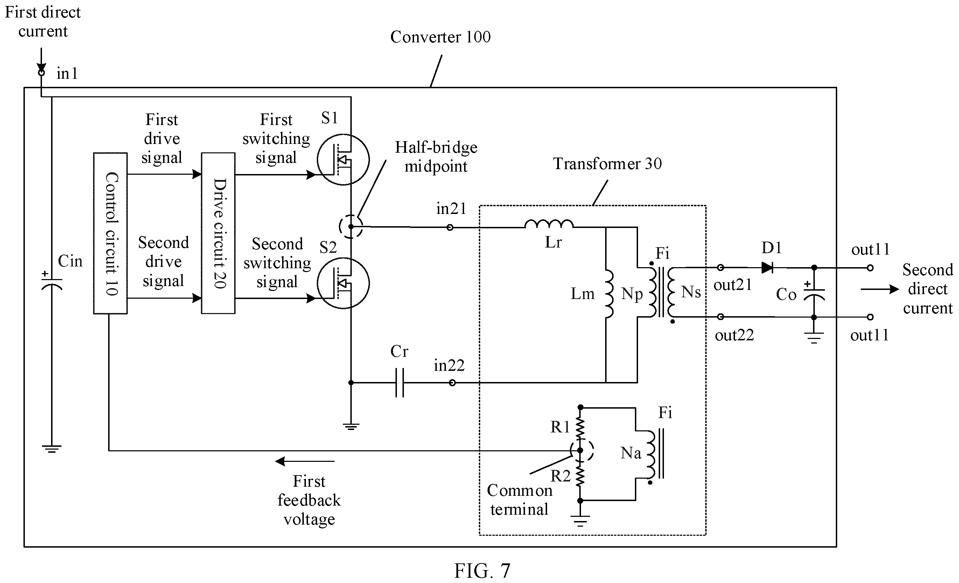

FIG. 7 is a schematic diagram of another structure of a converter according to this application. FIG. 7 shows a form in which the auxiliary winding and the primary-side winding are coupled by changing the dotted terminal.

As shown in FIG. 7, when the auxiliary winding and the primary-side winding are coupled by changing the dotted terminal, components included in the converter 100 and a connection relationship between the components are basically the same as components included in the converter 100 and a connection relationship between the components described based on FIG. 4 in Coupling manner 1, and a unique difference lies in that: One terminal of the first voltage divider resistor R1 is connected to an undotted terminal of the auxiliary winding Na, and the other terminal of the first voltage divider resistor R1 is connected to one terminal of the second voltage divider resistor R2 to form a common terminal of the first voltage divider resistor R1 and the second voltage divider resistor R2. The other terminal of the second voltage divider resistor R2 and a dotted terminal of the auxiliary winding Na are connected, and are both connected to the reference ground. The auxiliary winding Na and the primary-side winding Np are both coupled to an iron core Fi, and the undotted terminal of the auxiliary winding Na is close to an undotted terminal of the primary-side winding Np. The common terminal of the first voltage divider resistor R1 and the second voltage divider resistor R2 is connected to the control circuit 10, and the control circuit 10 may obtain a first feedback voltage from the common terminal of the first voltage divider resistor R1 and the second voltage divider resistor R2. The first feedback voltage may accurately reflect a change situation of the half-bridge midpoint voltage. Herein, for other components included in the converter 100 and a connection relationship between these components, refer to corresponding descriptions in Coupling manner 1. Details are not described herein again.

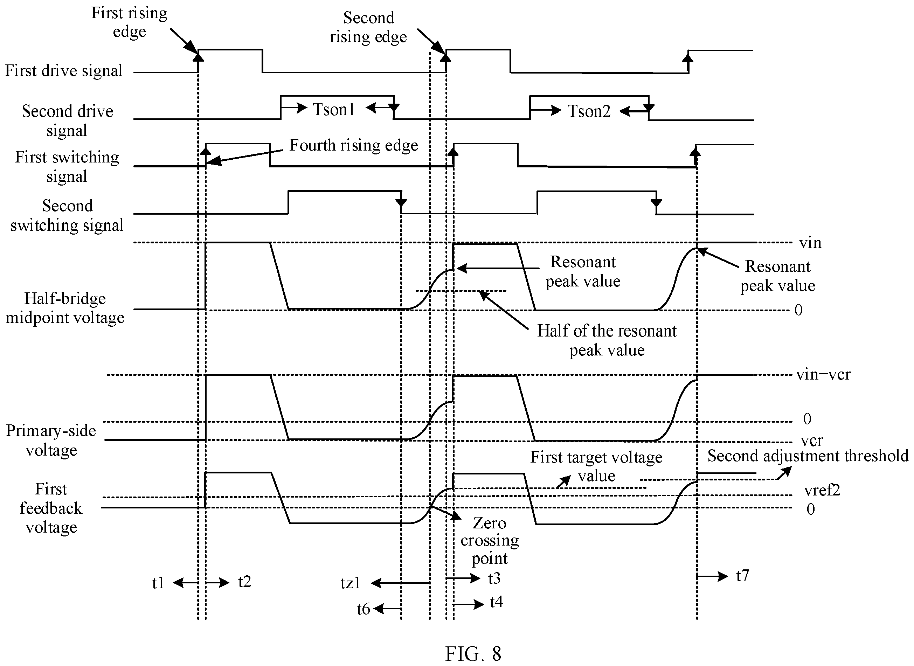

FIG. 8 is a diagram of another signal curve of a converter according to this application. FIG. 8 further shows change curves of a terminal voltage (briefly referred to as a primary-side voltage) of the primary-side winding Np and the first feedback voltage obtained from the common terminal of the first voltage divider resistor R1 and the second voltage divider resistor R2 when the converter 100 is of the structure shown in FIG. 7. With reference to the curves shown in FIG. 8, it should be understood that, at a moment at which the primary switching transistor S1 receives a fourth rising edge of the first switching signal, the value of the half-bridge midpoint voltage gradually increases from the zero voltage value to the input voltage value vin, and the value of the first feedback voltage gradually changes from zero to a maximum value vmax2 of the first feedback voltage. It should be understood that, in the structure shown in FIG. 7, there is a fixed relationship between the value of the first feedback voltage and the value of the half-bridge midpoint voltage. A minimum value vmin2 of the first feedback voltage satisfies

$$\text{vmin2} = -vcr \times \frac{r2}{r1+r2} \times \frac{na}{np}.$$

Herein, *ver* is a terminal voltage value of the resonant capacitor Vcr, r2 is a resistance value of the second voltage divider resistor R2, r1 is a resistance value of the first voltage divider resistor r1, na is a quantity of turns of the auxiliary winding Na, and np is a quantity of turns of the primary-side winding Np. The maximum value vmax2 of the first feedback voltage satisfies

$$\text{vmax2} = (vin - vcr) \times \frac{r2}{r1+r2} \times \frac{na}{np}.$$

In some feasible implementations, after detecting the first moment t1 at which the first rising edge is located, the control circuit 10 may be further configured to: obtain the first feedback voltage from the common terminal of the first voltage divider resistor R1 and the second voltage divider resistor R2, and determine in real time whether the value of the first feedback voltage is less than a preset third voltage threshold (assumed to be vref2). The third voltage threshold vref2 is greater than a zero voltage value, and a difference between the third voltage threshold vref2 and the zero voltage value is less than or equal to a second preset difference value. Further, the control circuit 10 may determine that a moment at which the control circuit 10 detects for a first time that the value of the first feedback voltage is greater than the third voltage threshold vref2 is a second moment t2 at which the value of the half-bridge midpoint voltage of the converter 100 reaches the input voltage value vin.

Because the value of the half-bridge midpoint voltage gradually increases to the input voltage value vin only after the primary switching transistor S1 is really conducted, if a moment at which the value of the half-bridge midpoint voltage really reaches the input voltage value vin is determined as a second moment at which the primary switching transistor S1 is really conducted, the detected second moment is reached after a detection time period generated in a process in which the half-bridge midpoint voltage gradually changes is introduced, and the detected second moment is inaccurate. However, in the foregoing implementation, the control circuit 10 determines, by detecting a moment at which the value of the first feedback voltage reaches, for the first time, the third voltage threshold vref2 greater than the zero voltage value, a moment at which the value of the half-bridge midpoint voltage increases to the input voltage value vin, to indirectly determine the second moment t2 at which the primary switching transistor S1 is really conducted. The third voltage threshold vref2 slightly greater than the zero voltage value is used as a condition for determining the second moment at which the primary switching transistor S1 is really conducted, to effectively reduce a detection delay generated in the process in which the half-bridge midpoint voltage gradually changes, and ensure accuracy of the detected second moment t2.

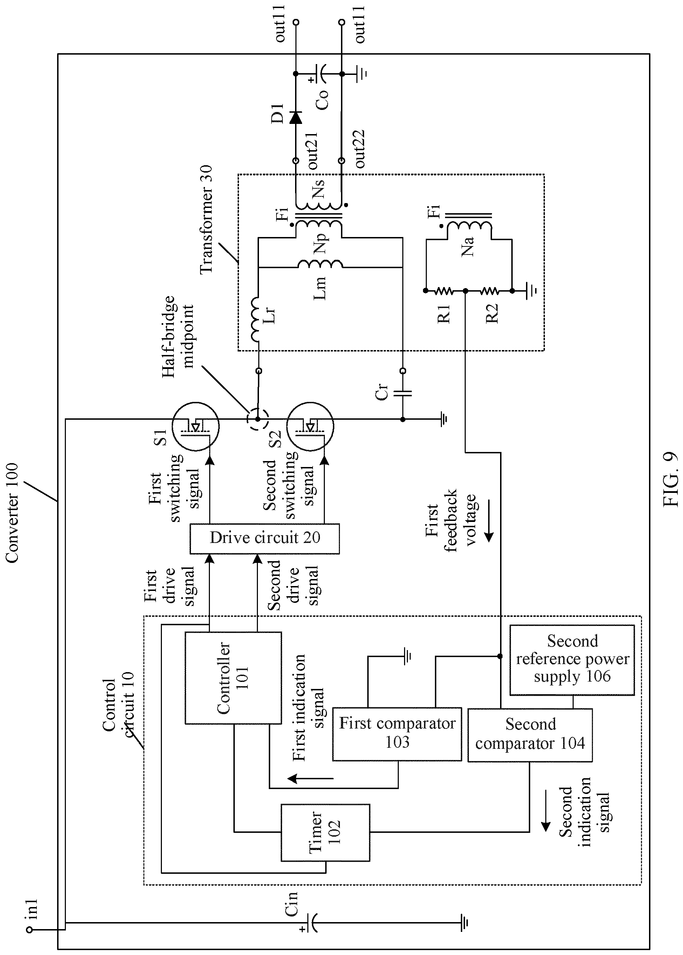

Further, in an optional implementation, FIG. 9 is a schematic diagram of another structure of a converter according to this application. As shown in FIG. 9, the control circuit 10 may include a controller 101, a timer 102, and a second comparator 104, and a second reference power supply 106. A first terminal of the second comparator 104 is connected to the common terminal of the first voltage divider resistor R1 and the second voltage divider resistor R2, and a second terminal of the second comparator 104 is connected to the second reference power supply 106. A voltage value of the second reference power supply 106 is the third voltage threshold vref2. A third terminal of the second comparator 104 is connected to a first terminal of the timer 102, a second terminal of the timer 102 is connected to a second terminal that is of the controller 101 and that outputs the first drive signal, and a third terminal of the timer 102 is connected to a third terminal of the controller 101. The second terminal of the controller 101 is further connected to the drive circuit 20, and a fourth terminal of the controller 101 is also connected to the drive circuit 20.

In actual work, the controller 101 may be configured to: generate the first drive signal, and send the first drive signal to the drive circuit 20 through the second terminal of the controller 101. The controller 101 may be further configured to: generate the second drive signal, and send the second drive signal to the drive circuit 20 through the fourth terminal of the controller 101. The timer 102 may be configured to: determine that a moment at which the timer 102 detects the first rising edge is the first moment t1, and start timing at the first moment t1. The second comparator 104 is configured to: obtain the first feedback voltage, and detect in real time whether the value of the first feedback voltage is greater than the third voltage threshold vref2. The second comparator 104 is further configured to send a second indication signal to the timer 102 when it is detected for the first time that the value of the first feedback voltage is greater than the third voltage threshold vref2. Optionally, the second comparator 104 is a common analog comparator. When a positive phase terminal of the second comparator is connected to the third voltage threshold vref2, and a negative phase terminal is connected to the first feedback voltage, the second indication signal is a falling edge. When the positive phase terminal of the second comparator is connected to the first feedback voltage, and the negative phase terminal is connected to the third voltage threshold vref2, the second indication signal is a rising edge. The timer 102 is further configured to: determine that a moment at which the second indication signal is detected is the second moment t2, and stop timing at the second moment t2. The controller 101 is further configured to: obtain timing duration of the timer 102, and determine the timing duration as the drive delay td.

In the foregoing implementation, the control circuit 10 detects the drive delay td by using an analog device such as the timer 102 and the second comparator 104, to avoid a requirement generated for an analog-to-digital converter and a digital-to-analog converter when digital logic processing is performed, and simplify a structure of the control circuit 10.

It should be additionally noted that, when the converter 100 is of the structure shown in FIG. 7, a process in which the control circuit 10 detects the first deadband midpoint moment tz1 of the half-bridge midpoint voltage is the same as the process in which the control circuit 10 detects the first deadband midpoint moment tz1 of the half-bridge midpoint voltage described in Coupling manner 1, and a unique difference lies in that in Coupling manner 1, after the auxiliary switching transistor S2 is cut off, the value of the first feedback voltage gradually decreases from the maximum value vmax1 of the first feedback voltage and crosses zero. However, in Coupling manner 2, after the auxiliary switching transistor S2 is cut off, the value of the first feedback voltage gradually increases from the minimum value vmin2 of the first feedback voltage and crosses zero. Because specific detection processes are the same, the process in which the control circuit 10 detects the first deadband midpoint moment tz1 of the half-bridge midpoint voltage is not repeatedly described herein, to avoid repetition.

In some feasible implementations, when outputting the second rising edge, the control circuit 10 may be further configured to obtain a value of the first feedback voltage at the fourth moment t4 (for ease of distinguishing, the first target voltage value is used as a substitute for description below). Then, the control circuit 10 may compare the first target voltage value with a preset second adjustment threshold. The second adjustment threshold is a product of the minimum value vmin2 of the first feedback voltage and a second preset coefficient, and the second preset coefficient is greater than or equal to 0. 75 and less than or equal to 0. 9. If the control circuit 10 determines that the first target voltage value is less than the second adjustment threshold, next conduction duration of the auxiliary switching transistor S2 may be increased. If the control circuit 10 determines that the first target voltage value is greater than or equal to the second adjustment threshold, next conduction duration of the auxiliary switching transistor S2 may be reduced. It should be noted that, when the control circuit 10 determines that the first target voltage value is less than the second adjustment threshold, it indicates that a resonant peak value of the half-bridge midpoint voltage at the fourth moment t4 has not reached a requirement, and a next resonant peak value needs to be slightly increased. The resonant peak value of the half-bridge midpoint voltage is controlled based on the conduction duration of the auxiliary switching transistor, and longer conduction duration of the auxiliary switching transistor S2 indicates that the resonant peak value of the half-bridge midpoint voltage is closer to the input voltage vin, and the value of the first feedback voltage is closer to the maximum value vmax2 of the first feedback voltage. Therefore, when the control circuit 10 determines that the first target voltage value is less than the second adjustment threshold, it indicates that a next resonant peak value of the half-bridge midpoint voltage needs to be increased, and next conduction duration of the auxiliary switching transistor S2 may be increased. If the control circuit 10 determines that the first target voltage value is greater than or equal to the second adjustment threshold, it indicates that a next resonant peak value of the half-bridge midpoint voltage needs to be reduced, and next conduction duration of the auxiliary switching transistor S2 may be reduced. For example, as shown in FIG. 5, the control circuit 10 may obtain the first target voltage value of the first feedback voltage at the fourth moment t4. Then, if the control circuit 10 determines that the first target voltage value is less than the second adjustment threshold, next conduction duration of the auxiliary switching transistor S2 may be increased, so that a conduction time period Tson2 of the auxiliary switching transistor S2 is greater than a conduction time period Tson1. In this way, a value of the first feedback voltage at a subsequent seventh moment t7 can be closer to the first adjustment threshold than the first target voltage value. Herein, the seventh moment t7 is a moment at which the half-bridge midpoint voltage reaches the resonant peak value next time.

Implementation scenario 2:

In Implementation scenario 2, the converter 100 is of the structure shown in FIG. 2. In this case, the first voltage threshold is a zero voltage value.

In some feasible implementations, the control circuit 10 is configured to determine a fourth moment t4 at which the half-bridge midpoint voltage of the converter 100 reaches a resonant valley value. Then, the control circuit 10 may be configured to determine the third moment t3 based on the fourth moment t4 and the previously determined drive delay td. The third moment t3 is before the fourth moment t4, and a time difference between the third moment t3 and the fourth moment t4 is the drive delay td. It should be noted that, in this implementation scenario, the half-bridge midpoint voltage is periodically resonant, and always jumps to the zero voltage value after reaching the resonant valley value. Usually, in a process in which the primary switching transistor S1 and the auxiliary switching transistor S2 each are conducted and cut off for one time, the half-bridge midpoint voltage is resonant for one time, and is usually resonant after the auxiliary switching transistor S2 is cut off. In addition, a resonance period of the half-bridge midpoint voltage is fixed, the resonant valley value is not fixed, and the resonant valley value of the half-bridge midpoint voltage is determined based on conduction duration of the auxiliary switching transistor S2. Longer conduction duration of the auxiliary switching transistor S2 indicates that the resonant valley value is closer to the zero voltage value.

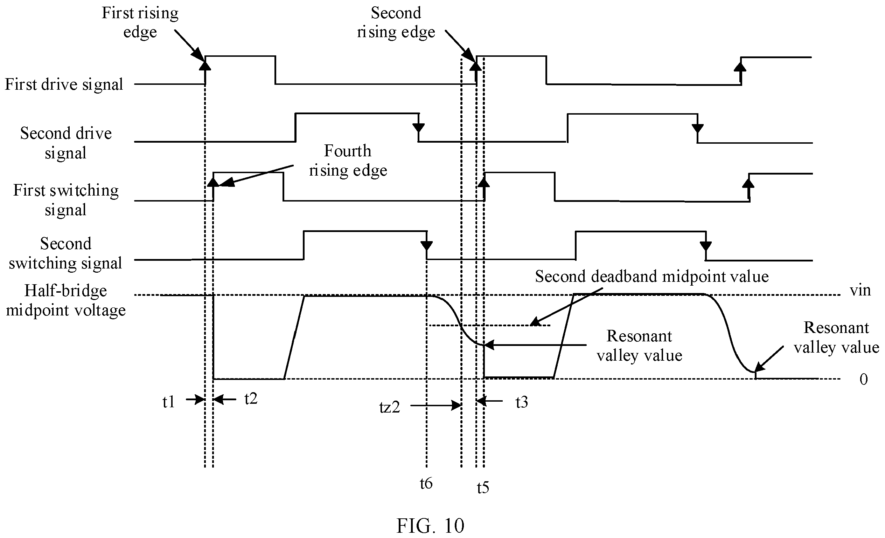

For example, FIG. 10 is a diagram of another signal curve of a converter according to this application.

FIG. 10 shows time-domain change curves of the first drive signal, the second drive signal, the first switching signal, the second switching signal, and the half-bridge midpoint voltage. As shown in FIG. 10, t6 is a moment at which a falling edge of the second switching signal is located. After the moment t6 (that is, after the auxiliary switching transistor S2 is cut off), the half-bridge midpoint voltage is resonant, gradually decreases from the input voltage value, reaches the resonant valley value of the half-bridge midpoint voltage at a fifth moment t5, and further jumps to the zero voltage value. The control circuit 10 may be configured to: determine the first moment t1 and the second moment t2, and then determine a difference between the first moment t1 and the second moment t2 as the drive delay td. Then, the control circuit 10 may predict the fifth moment t5 at which the half-bridge midpoint voltage is resonant from the input voltage value vin to the resonant valley value, and determine a difference between the fifth moment t5 and the drive delay td as the third moment t3 at which the control circuit 10 conducts the primary switching transistor S1 next time.

Because there is a drive delay td in the drive circuit, there is a drive delay td between rising edges or falling edges corresponding to the first drive signal and a first switching signal actually received by the primary switching transistor S1. Therefore, when a $2^{nd}$ rising edge of the first drive signal is output at the third moment t3 determined with reference to the drive delay td and the fifth moment t5 at which the resonant valley value of the half-bridge midpoint voltage occurs, it can be ensured that the first switching signal just occurs at the fifth moment t5, so that the primary switching transistor S1 can be just conducted at the fifth moment t5, the primary switching transistor S1 can be accurately conducted at the resonant valley value of the half-bridge midpoint voltage, and a ZVS control effect of the converter 100 can be improved.

In some feasible implementations, the control circuit 10 may obtain a second deadband midpoint moment (assumed to be tz2 herein) corresponding to the half-bridge midpoint voltage. As shown in FIG. 10, a value of the half-bridge midpoint voltage at the second deadband midpoint moment tz1 is a sum of the resonant valley value and a half of a difference between the input voltage value vin of the converter 100 and the resonant valley value of the half-bridge midpoint voltage (for ease of description, the value is represented as a second deadband midpoint value below). In addition, the second deadband midpoint moment tz2 is also one quarter of a resonance period of the half-bridge midpoint voltage. Then, the control circuit 10 may determine, based on the second deadband midpoint moment tz2 and one quarter of the resonance period of the half-bridge midpoint voltage, the fifth moment t5 at which the half-bridge midpoint voltage reaches the resonant valley value. Specifically, the control circuit 10 may determine a sum of the second deadband midpoint moment tz2 and one quarter of the resonance period of the half-bridge midpoint voltage as the fifth moment t5.

In some feasible implementations, the transformer 30 may further include an auxiliary winding, a first voltage divider resistor, and a second voltage divider resistor that are connected in series. One terminal of the first voltage divider resistor is connected to one terminal of the auxiliary winding, the other terminal of the first voltage divider circuit is connected to one terminal of the second voltage divider resistor, and the other terminal of the second voltage divider resistor and the other terminal of the auxiliary winding are both connected to the reference ground. Herein, there are two different coupling manners between the auxiliary winding and the primary-side winding of the transformer 30. In other words, the auxiliary winding and the primary-side winding of the transformer 30 are coupled by changing an undotted terminal, or the auxiliary winding and the primary-side winding of the transformer 30 are coupled by changing a dotted terminal. In this embodiment of this application, the auxiliary winding and the primary-side winding of the transformer 30 are coupled by changing the undotted terminal. In other words, the auxiliary winding and the primary-side winding of the transformer 30 are coupled to a same iron core, and an undotted terminal on one side is close to a dotted terminal on the other side. The auxiliary winding and the primary-side winding of the transformer 30 are coupled by changing the dotted terminal. In other words, the auxiliary winding and the primary-side winding of the transformer 30 are coupled to a same iron core, and two dotted terminals of the auxiliary winding and the primary-side winding of the transformer 30 are close to each other. Because the two different coupling manners lead to a difference in a process in which the converter 100 detects the drive delay td and determines the third moment t3, the following further describes a structure and a function of the converter 100 with reference to the two different coupling manners.

Coupling manner 3:

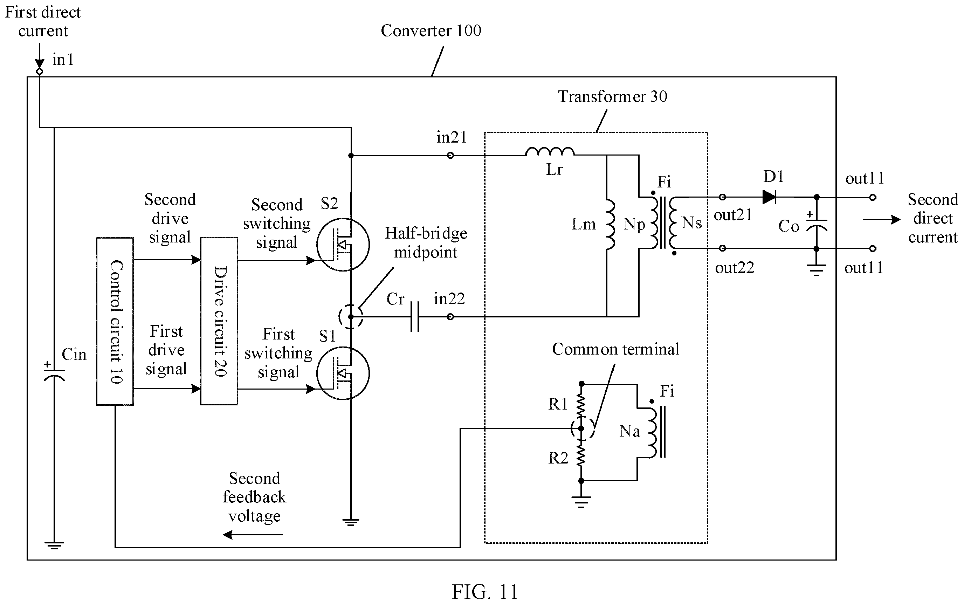

FIG. 11 is a schematic diagram of another structure of a converter according to this application. FIG. 11 shows a form in which when the primary switching transistor S1 is connected to the reference ground, the auxiliary winding and the primary-side winding are coupled by changing the undotted terminal.

As shown in FIG. 11, the transformer 30 (which may also be referred to as a flyback transformer) may include a resonant inductor Lr (including a leakage inductor and an external inductor of the transformer 30, which may be both integrated into the transformer 30), an excitation inductor Lm, a primary-side winding Np, a secondary-side winding Ns, an iron core Fi, an auxiliary winding Na, a first voltage divider voltage R1, and a second voltage divider resistor R2. It should be understood that, in an actual implementation, the first voltage divider voltage R1 and the second voltage divider resistor R2 may not be included in the transformer 30. In addition, the converter may further include a resonant capacitor Cr, a rectifier diode D1, an output capacitor Co, and an input capacitor Cin.

The input capacitor Cin is disposed between the input terminal in1 of the converter 100 and the reference ground. A drain of the auxiliary switching transistor S2 serves as the first terminal of the auxiliary switching transistor S2 and is connected to the input terminal in1 of the converter 100, a source of the auxiliary switching transistor S2 serves as the second terminal of the auxiliary switching transistor S2 and is connected to a drain of the primary switching transistor S1 (that is, the first terminal of the primary switching transistor S1), and a source of the primary switching transistor S1 serves as the second terminal of the primary switching transistor S1 and is connected to the reference ground. A gate of the primary switching transistor S1 serves as the third terminal of the primary switching transistor S1 and is connected to the drive circuit 20, and a gate of the auxiliary switching transistor S2 serves as a second terminal of the auxiliary switching transistor S2 and is connected to the drive circuit 20.

An input terminal in2 of the transformer 30 includes the first input terminal in21 and the second input terminal in22, and the output terminal out2 of the transformer 30 includes a first output terminal out21 and a second output terminal out22. One terminal of the resonant inductor Lr is connected to the source of the auxiliary switching transistor S2 by using or by serving as the first input terminal in21 of the transformer 30, the other terminal of the resonant inductor Lr is connected to a dotted terminal of the primary-side winding Np, an undotted terminal of the primary-side winding Np is connected to one terminal of the resonant capacitor Cr by using or by serving as the second input terminal in22 of the transformer 30, the other terminal of the resonant capacitor Cr is connected to the source of the primary switching transistor S1, and the excitation inductor Lm is connected to the primary-side winding Np in parallel. An undotted terminal and a dotted terminal of the secondary-side winding Ns are respectively connected to the first output terminal out21 and the second output terminal out22 of the transformer 30. The primary-side winding Np and the secondary-side winding Ns are both coupled to the iron core Fi. Optionally, the resonant inductor Lr may not be included in the transformer 30.

The output terminal out1 of the converter 100 includes the first output terminal out11 and the second output terminal out12, and is configured to output the second direct current. The first output terminal out21 of the transformer 30 is connected to the first output terminal out11 of the converter 100 through the rectifier diode D1, and the second output terminal out22 of the transformer 30 is connected to the second output terminal out12 of the converter 100 and the reference ground. The output capacitor Co is further disposed between the first output terminal out11 and the second output terminal out12 of the converter 100.

The auxiliary winding Na, the first voltage divider resistor R1, and the second voltage divider resistor R2 are connected to each other in series. One terminal of the first voltage divider resistor R1 is connected to a dotted terminal of the auxiliary winding Na, and the other terminal of the first voltage divider resistor R1 is connected to one terminal of the second voltage divider resistor R2 to form a common terminal of the first voltage divider resistor R1 and the second voltage divider resistor R2. The other terminal of the second voltage divider resistor R2 and an undotted terminal of the auxiliary winding Na are connected, and are both connected to the reference ground. The auxiliary winding Na and the primary-side winding Np are both coupled to the iron core Fi, and the dotted terminal of the auxiliary winding Na is close to the undotted terminal of the primary-side winding Np. The common terminal of the first voltage divider resistor R1 and the second voltage divider resistor R2 is connected to the control circuit 10, and the control circuit 10 may obtain a second feedback voltage from the common terminal of the first voltage divider resistor R1 and the second voltage divider resistor R2. In other words, the second feedback voltage is a voltage of the common terminal of the first voltage divider resistor R1 and the second voltage divider resistor R2 relative to the reference ground. The second feedback voltage may accurately reflect a change situation of the half-bridge midpoint voltage.

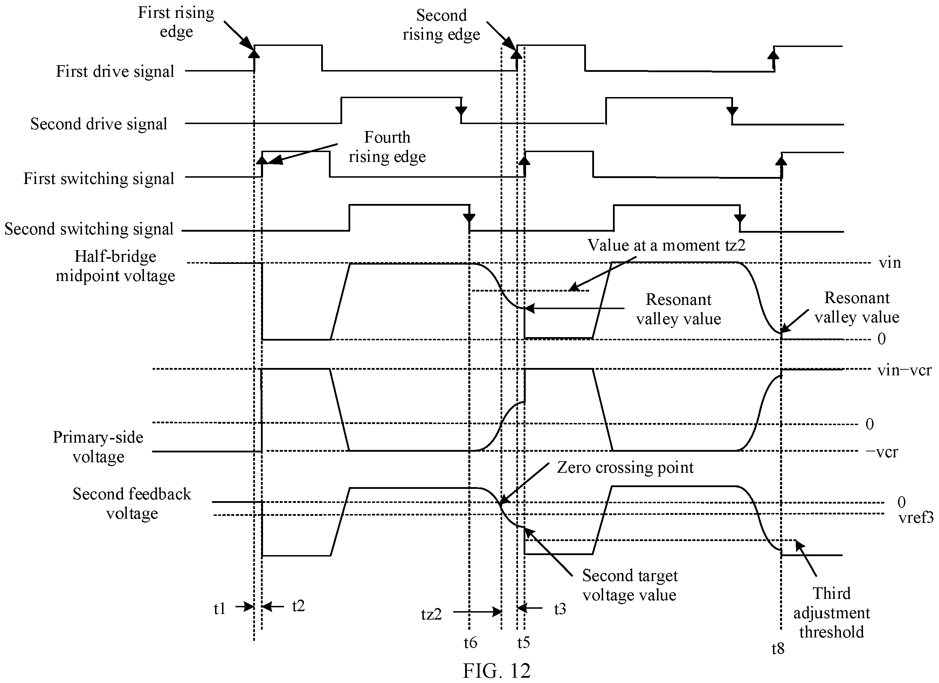

FIG. 12 is a diagram of another signal curve of a converter according to this application. FIG. 12 further shows change curves of a terminal voltage (briefly referred to as a primary-side voltage) of the primary-side winding Np and the second feedback voltage obtained from the common terminal of the first voltage divider resistor R1 and the second voltage divider resistor R2 when the converter 100 is of the structure shown in FIG. 11. With reference to the curves shown in FIG. 12, it should be understood that, at a moment at which the primary switching transistor S1 receives a fourth rising edge of the first switching signal, the value of the half-bridge midpoint voltage gradually decreases from the input voltage value vin to the zero voltage value, and correspondingly, a value of the second feedback voltage gradually changes from zero to a minimum value vmin3 of the second feedback voltage. It should be understood that, in the structure shown in FIG. 11, there is a fixed relationship between the value of the second feedback voltage and the value of the half-bridge midpoint voltage. The maximum value vmax3 of the second feedback voltage sat-

$$\mathrm{vmax3} = vcr \times \frac{r2}{r1+r2} \times \frac{na}{np}$$

isfies . Herein, *ver* is a terminal voltage value of the resonant capacitor Vcr, r2 is a resistance value of the second voltage divider resistor R2, r1 is a resistance value of the first voltage divider resistor r1, na is a quantity of turns of the auxiliary winding Na, and np is a quantity of turns of the primary-side winding Np. A minimum value vmin3 of the second feedback

voltage satisfies

$$vmin3 = -(vin - vcr) \times \frac{r2}{r1+r2} \times \frac{na}{np}$$

In some feasible implementations, after detecting the first moment t1 at which the first rising edge is located, the control circuit 10 may be further configured to: obtain the second feedback voltage from the common terminal of the first voltage divider resistor R1 and the second voltage divider resistor R2, and determine in real time whether the value of the second feedback voltage is less than a preset fourth voltage threshold (assumed to be vref3). The fourth voltage threshold vref2 is less than a zero voltage value, and a difference between the fourth voltage threshold vref3 and the zero voltage value is less than or equal to a third preset difference value. Further, the control circuit 10 may determine that a moment at which the control circuit 10 detects for a first time that the value of the second feedback voltage is less than the fourth voltage threshold vref3 is the second moment t2 at which the value of the half-bridge midpoint voltage of the converter 100 reaches the zero voltage value. Herein, the fourth voltage threshold vref3 may be equal or unequal to the second voltage threshold vref1. This is not limited in this application.

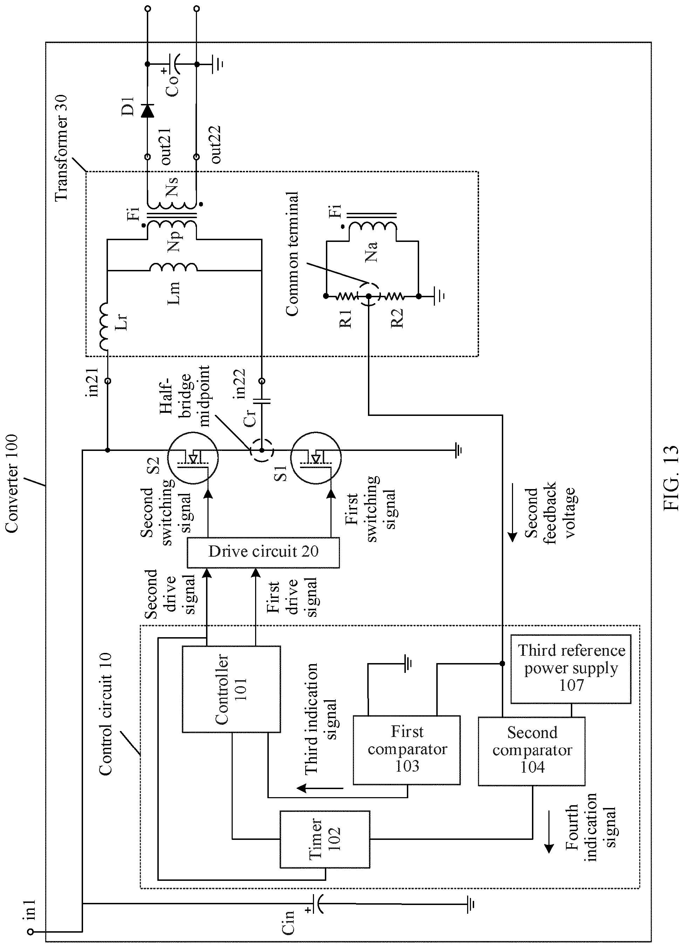

Because the value of the half-bridge midpoint voltage gradually decreases to the zero voltage value only after the primary switching transistor S1 is really conducted, if a moment at which the value of the half-bridge midpoint voltage really reaches the zero voltage value is determined as the second moment at which the primary switching transistor S1 is really conducted, the detected second moment t2 is reached after a delay generated in the process in which the half-bridge midpoint voltage gradually changes is introduced, and the detected second moment is inaccurate. However, in the foregoing implementation, the control circuit 10 determines, by detecting the moment at which the value of the second feedback voltage reaches, for a first time, the fourth voltage threshold vref3 less than the zero voltage value, a moment at which the value of the half-bridge midpoint voltage decreases to the zero voltage value, to indirectly determine the moment t2 at which the primary switching transistor S1 is really conducted. The fourth voltage threshold vref3 slightly less than the zero voltage value is used as a condition for determining the second moment t2 at which the primary switching transistor S 1 is really conducted, to effectively reduce a detection delay generated in the process in which the half-bridge midpoint voltage gradually changes, and ensure accuracy of the detected second moment t2. Further, in an optional implementation, FIG. 13 is a schematic diagram of another structure of a converter according to this application. As shown in FIG. 13, the control circuit 10 may include a controller 101, a timer 102, a second comparator 104, and a third reference power supply 107. A first terminal of the second comparator 104 is connected to the common terminal of the first voltage divider resistor R1 and the second voltage divider resistor R2, and a second terminal of the second comparator 104 is connected to the third reference power supply 107. A voltage value of the third reference power supply 107 is the fourth voltage threshold vref1. A third terminal of the second comparator 104 is connected to a first terminal of the timer 102, a second terminal of the timer 102 is connected to a second terminal that is of the controller 101 and that outputs the first drive signal, and a third terminal of the timer 102 is connected to a third terminal of the controller 101. The second terminal of the controller 101 is further connected to the drive circuit 20, and a fourth terminal of the controller 101 is also connected to the drive circuit 20.

In actual work, the controller 101 may be configured to: generate the first drive signal, and send the first drive signal to the drive circuit 20 through the second terminal of the controller 101. The controller 101 may be further configured to: generate the second drive signal, and send the second drive signal to the drive circuit 20 through the fourth terminal of the controller 101. The timer 102 may be configured to: determine that a moment at which the timer 102 detects the first rising edge is the first moment t1, and start timing at the first moment t1. The second comparator 104 is configured to: obtain the second feedback voltage, and detect in real time whether the value of the second feedback voltage is less than the fourth voltage threshold vref3. The second comparator 104 is further configured to send a fourth indication signal to the timer 102 when it is detected for the first time that the value of the second feedback voltage is less than the fourth voltage threshold vref3. Optionally, the second comparator 104 is a common analog comparator. When a positive phase terminal of the second comparator is connected to the fourth voltage threshold vref3, and a negative phase terminal is connected to the second feedback voltage, the fourth indication signal is a rising edge. When the positive phase terminal of the second comparator 104 is connected to the first feedback voltage, and the negative phase terminal is connected to the fourth voltage threshold vref3, the fourth indication signal is a falling edge. The timer 102 is further configured to: determine that a moment at which the fourth indication signal is detected is the second moment t2, and stop timing at the second moment t2. The controller 101 is further configured to: obtain timing duration of the timer 102, and determine the timing duration as the drive delay td.

In the foregoing implementation, the control circuit 10 detects the drive delay td by using an analog device such as the timer 102 and the second comparator 104, to avoid a requirement generated for an analog-to-digital converter and a digital-to-analog converter when digital logic processing is performed, and simplify a structure of the control circuit 10.

With reference to FIG. 12, it should be understood that, in a time period in which the auxiliary switching transistor S2 is cut off, when the value of the second feedback voltage is the zero voltage value, the value of the half-bridge midpoint voltage just reaches the second deadband midpoint value. In some feasible implementations, the control circuit 10 may be configured to obtain the second feedback voltage from the common terminal of the first voltage divider resistor R1 and the second voltage divider resistor R2. The control circuit 10 may be further configured to: after determining that the auxiliary switching transistor S2 is cut off, determine that a detected moment at which the value of the second feedback voltage reaches the zero voltage value is the second deadband midpoint moment tz2 of the half-bridge midpoint voltage.

In the foregoing implementation, the second deadband midpoint moment tz2 of the half-bridge midpoint voltage is detected by performing zero-crossing detection on the second feedback voltage. This manner is simple and reliable, may ensure detection efficiency and accuracy of the second deadband midpoint moment tz2, and may ensure detection efficiency and accuracy of the fifth moment t5.

Further, in a feasible implementation, as shown in FIG. 13, the control circuit 10 may further include a first comparator 103. A first terminal of the first comparator 103 is connected to the common terminal of the first voltage divider resistor R1 and the second voltage divider resistor R2. A second terminal of the first comparator 103 is connected to the reference ground, and a third terminal of the first comparator 103 is connected to a first terminal of the controller 101.

In actual work, the first comparator 103 is configured to: obtain the second feedback voltage from the common terminal of the first voltage divider resistor R1 and the second voltage divider resistor R2, and send a third indication signal to the controller 101 when it is detected that the value of the second feedback voltage is equal to the zero voltage value. Optionally, the first comparator 103 is a common analog comparator. When a positive phase terminal of the first comparator 103 is connected to the reference ground, and a negative phase terminal is connected to the second feedback voltage, the third indication signal is a falling edge. When the positive phase terminal of the first comparator 103 is connected to the second feedback voltage, and the negative phase terminal is connected to the reference ground, the third indication signal is a rising edge. After determining that the auxiliary switching transistor S2 is cut off, the controller 101 is configured to determine that a moment at which the third indication signal is detected is the second deadband midpoint moment tz2 of the half-bridge midpoint voltage.

In the foregoing implementation, the control circuit 10 detects the second deadband midpoint moment tz2 by using an analog device such as the first comparator 103, to avoid a requirement generated for an analog-to-digital converter or a digital-to-analog converter when digital logic processing is performed, and simplify a structure of the control circuit 10.

It should be understood that, for the converter 100, it not only needs to be ensured that the primary switching transistor S1 is conducted at the resonant peak value of the half-bridge midpoint voltage, but also needs to be ensured that the resonant valley value of the half-bridge midpoint voltage is close to the zero voltage value as much as possible. In this way, it can be ensured that the primary switching transistor S 1 can implement ZVS, to ensure an overall ZVS control effect of the converter 100.

In some feasible implementations, when outputting the second rising edge, the control circuit 10 may be further configured to obtain a value of the second feedback voltage at the fifth moment t5 (for ease of distinguishing, the second target voltage value is used as a substitute for description below). Then, the control circuit 10 may compare the second target voltage value with a preset third adjustment threshold. The third adjustment threshold is a product of the minimum value vmin3 of the second feedback voltage and a third preset coefficient, and the third preset coefficient is greater than or equal to 0. 75 and less than or equal to 0. 9. If the control circuit 10 determines that the second target voltage value is less than or equal to the third adjustment threshold, next conduction duration of the auxiliary switching transistor S2 may be reduced. If the control circuit 10 determines that the second target voltage value is greater than the third adjustment threshold, next conduction duration of the auxiliary switching transistor S2 may be increased. It should be noted that, when the control circuit 10 determines that the second target voltage value is less than or equal to the third adjustment threshold, it indicates that a resonant valley value of the half-bridge midpoint voltage at the fifth moment t5 has reached a requirement, and a next resonant valley value needs to be further reduced. The resonant valley value of the half-bridge midpoint voltage is controlled based on the conduction duration of the auxiliary switching transistor, and longer conduction duration of the auxiliary switching transistor S2 indicates that the resonant valley value of the half-bridge midpoint voltage is closer to the zero voltage value, and the value of the second feedback voltage is closer to the minimum value vmin3 of the second feedback voltage. Therefore, when the control circuit 10 determines that the second target voltage value is less than the second adjustment threshold, it indicates that a next resonant valley value of the half-bridge midpoint voltage needs to be further reduced, and next conduction duration of the auxiliary switching transistor S2 may be reduced. If the control circuit 10 determines that the second target voltage value is greater than the second adjustment threshold, it indicates that a next resonant valley value of the half-bridge midpoint voltage needs to be increased, and next conduction duration of the auxiliary switching transistor S2 may be increased. For example, as shown in FIG. 12, the control circuit 10 may obtain the second target voltage value of the second feedback voltage at the fifth moment t5. Then, if the control circuit 10 determines that the second target voltage value is greater than the third adjustment threshold, next conduction duration of the auxiliary switching transistor S2 may be increased, so that a conduction time period Tson2 of the auxiliary switching transistor S2 is greater than a conduction time period Tson1. In this way, a value of the second feedback voltage at a subsequent eighth moment t8 can be closer to the second adjustment threshold than the second target voltage value. Herein, the eighth moment t8 is a moment at which the half-bridge midpoint voltage reaches the resonant valley value next time.

Coupling manner 4:

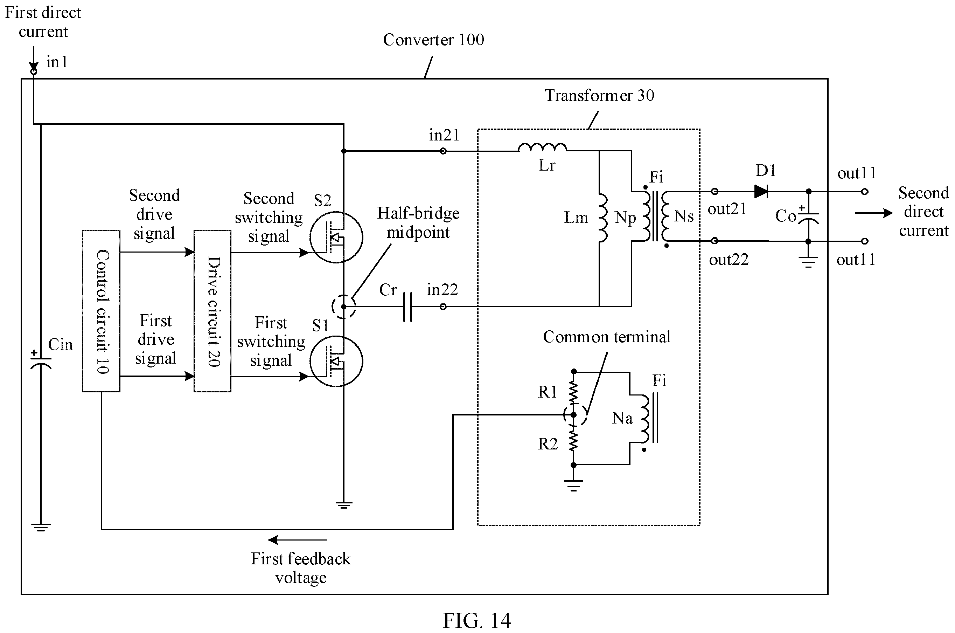

FIG. 14 is a schematic diagram of another structure of a converter according to this application. FIG. 7 shows a form in which the auxiliary winding and the primary-side winding are coupled by changing the dotted terminal.

As shown in FIG. 14, when the auxiliary winding and the primary-side winding are coupled by changing the dotted terminal, components included in the converter 100 and a connection relationship between the components are basically the same as components included in the converter 100 and a connection relationship between the components described based on FIG. 11 in Coupling manner 3, and a unique difference lies in that: One terminal of the first voltage divider resistor R1 is connected to an undotted terminal of the auxiliary winding Na, and the other terminal of the first voltage divider resistor R1 is connected to one terminal of the second voltage divider resistor R2 to form a common terminal of the first voltage divider resistor R1 and the second voltage divider resistor R2. The other terminal of the second voltage divider resistor R2 and a dotted terminal of the auxiliary winding Na are connected, and are both connected to the reference ground. The auxiliary winding Na and the primary-side winding Np are both coupled to an iron core Fi, and the undotted terminal of the auxiliary winding Na is close to an undotted terminal of the primary-side winding Np. The common terminal of the first voltage divider resistor R1 and the second voltage divider resistor R2 is connected to the control circuit 10, and the control circuit 10 may obtain a first feedback voltage from the common terminal of the first voltage divider resistor R1 and the second voltage divider resistor R2. The first feedback voltage may accurately reflect a change situation of the half-bridge midpoint voltage. Herein, for other components included in the converter 100 and a connection relationship between these components, refer to corresponding descriptions in Coupling manner 3. Details are not described herein again.

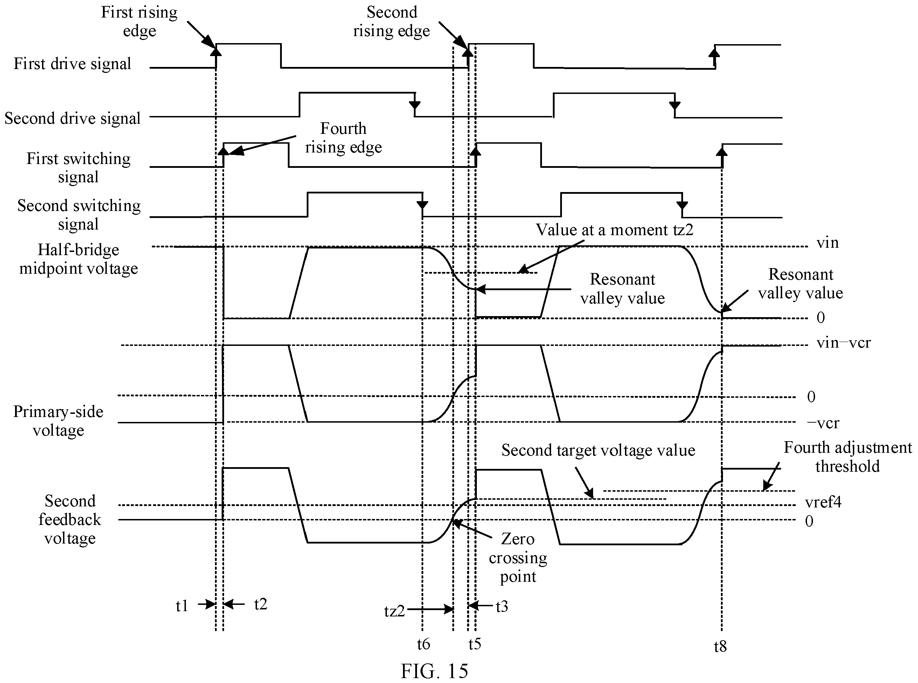

FIG. 15 is a diagram of another signal curve of a converter according to this application. FIG. 15 further shows change curves of a terminal voltage (briefly referred to as a primary-side voltage) of the primary-side winding Np and the first feedback voltage obtained from the common terminal of the first voltage divider resistor R1 and the second voltage divider resistor R2 when the converter 100 is of the structure shown in FIG. 14. With reference to the curves shown in FIG. 15, it should be understood that, at a moment at which the primary switching transistor S1 receives a fourth rising edge of the first switching signal, the value of the half-bridge midpoint voltage gradually decreases from the input voltage value vin to the zero voltage value, and a value of the second feedback voltage gradually changes from the zero voltage value to a maximum value vmax4 of the second feedback voltage. It should be understood that, in the structure shown in FIG. 14, there is still a fixed relationship between the value of the second feedback voltage and the value of the half-bridge midpoint voltage. A minimum value vmin4 of the second feedback voltage satisfies

$$\text{vmin4} = -vcr \times \frac{r2}{r1+r2} \times \frac{na}{np}$$ . Herein, *vcr* is a terminal voltage value of the resonant capacitor Vcr, r2 is a resistance value of the second voltage divider resistor R2, r1 is a resistance value of the first voltage divider resistor r1, na is a quantity of turns of the auxiliary winding Na, and np is a quantity of turns of the primary-side winding Np. A maximum value vmax4 of the second feedback

voltage satisfies $$\text{vmax4} = (vin - vcr) \times \frac{r2}{r1+r2} \times \frac{na}{np}$$ .

In some feasible implementations, after detecting the first moment t1 at which the first rising edge is located, the control circuit 10 may be further configured to: obtain the second feedback voltage from the common terminal of the first voltage divider resistor R1 and the second voltage divider resistor R2, and determine in real time whether the value of the second feedback voltage is greater than a preset fifth voltage threshold (assumed to be vref4). The fifth voltage threshold vref4 is greater than a zero voltage value, and a difference between the fifth voltage threshold vref4 and the zero voltage value is less than or equal to a fourth preset difference value. Further, the control circuit 10 may determine that a moment at which the control circuit 10 detects for a first time that the value of the second feedback voltage is greater than the fifth voltage threshold vref4 is the second moment t2 at which the value of the half-bridge midpoint voltage of the converter 100 reaches the zero voltage value.

Because the value of the half-bridge midpoint voltage gradually decreases to the zero voltage value only after the primary switching transistor S1 is really conducted, if a moment at which the value of the half-bridge midpoint voltage really reaches the zero voltage value is determined as the second moment t2 at which the primary switching transistor S1 is really conducted, the detected second moment t2 is reached after a detection time period generated in the process in which the half-bridge midpoint voltage gradually changes is introduced, and the detected second moment t2 is inaccurate. However, in the foregoing implementation, the control circuit 10 determines, by detecting the moment at which the value of the second feedback voltage reaches, for a first time, the third voltage threshold vref4 greater than the zero voltage value, a moment at which the value of the half-bridge midpoint voltage reaches the zero voltage value, to indirectly determine the second moment t2 at which the primary switching transistor S1 is really conducted. The fifth voltage threshold vref4 slightly greater than the zero voltage value is used as a condition for determining the second moment t2 at which the primary switching transistor S1 is really conducted, to effectively reduce a detection delay generated in the process in which the half-bridge midpoint voltage gradually changes, and ensure accuracy of the detected second moment t2.

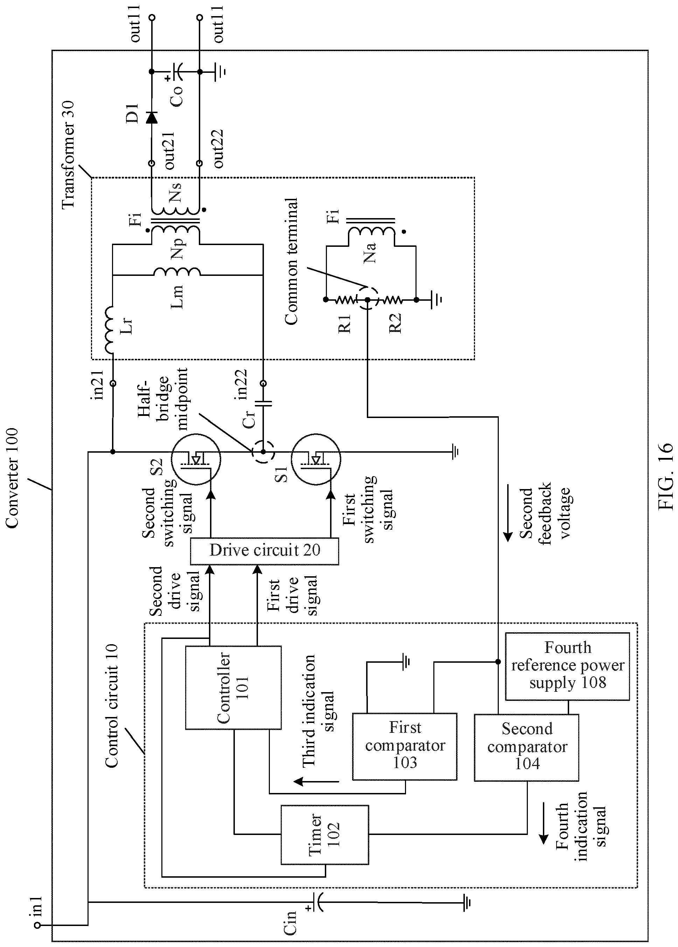

Further, in an optional implementation, FIG. 16 is a schematic diagram of another structure of a converter according to this application. As shown in FIG. 16, the control circuit 10 may include a controller 101, a timer 102, and a second comparator 104, and a fourth reference power supply 108. A first terminal of the second comparator 104 is connected to the common terminal of the first voltage divider resistor R1 and the second voltage divider resistor R2, and a second terminal of the second comparator 104 is connected to the fourth reference power supply 108. A voltage value of the fourth reference power supply 108 is the fifth voltage threshold vref4. A third terminal of the second comparator 104 is connected to a first terminal of the timer 102, a second terminal of the timer 102 is connected to a second terminal that is of the controller 101 and that outputs the first drive signal, and a third terminal of the timer 102 is connected to a third terminal of the controller 101. The second terminal of the controller 101 is further connected to the drive circuit 20, and a fourth terminal of the controller 101 is also connected to the drive circuit 20.

In actual work, the controller 101 may be configured to: generate the first drive signal, and send the first drive signal to the drive circuit 20 through the second terminal of the controller 101. The controller 101 may be further configured to: generate the second drive signal, and send the second drive signal to the drive circuit 20 through the fourth terminal of the controller 101. The timer 102 may be configured to: determine that a moment at which the timer 102 detects the first rising edge is the first moment t1, and start timing at the first moment t1. The second comparator 104 is configured to: obtain the second feedback voltage, and detect in real time whether the value of the second feedback voltage is greater than the fifth voltage threshold vref4. The second comparator 104 is further configured to send a fourth indication signal to the timer 102 when it is detected for the first time that the value of the second feedback voltage is greater than the fifth voltage threshold vref4. Optionally, the second comparator 104 is a common analog comparator. When a positive phase terminal of the second comparator vref4 is connected to the fifth voltage threshold vref4, and a negative phase terminal is connected to the second feedback voltage, the fourth indication signal is a falling edge. When the positive phase terminal of the second comparator 104 is connected to the second feedback voltage, and the negative phase terminal is connected to the fifth voltage threshold vref4, the fourth indication signal is a rising edge. The timer 102 is further configured to: determine that a moment at which the fourth indication signal is detected is the second moment t2, and stop timing at the second moment t2. The controller 101 is further configured to: obtain timing duration of the timer 102, and determine the timing duration as the drive delay td.

In the foregoing implementation, the control circuit 10 detects the drive delay td by using an analog device such as the timer 102 and the second comparator 104, to avoid a requirement generated for an analog-to-digital converter and a digital-to-analog converter when digital logic processing is performed, and simplify a structure of the control circuit 10.

It should be additionally noted that, when the converter 100 is of the structure shown in FIG. 14, a process in which the control circuit 10 detects the second deadband midpoint moment tz2 of the half-bridge midpoint voltage is the same as the process in which the control circuit 10 detects the second deadband midpoint moment tz2 of the half-bridge midpoint voltage described in Coupling manner 3, and a unique difference lies in that in Coupling manner 3, after the auxiliary switching transistor S2 is cut off, the value of the second feedback voltage gradually decreases from the maximum value vmax3 of the second feedback voltage and crosses zero. However, in Coupling manner 4, after the auxiliary switching transistor S2 is cut off, the value of the second feedback voltage gradually increases from the minimum value vmin4 of the second feedback voltage and crosses zero. Because specific detection processes are the same, the process in which the control circuit 10 detects the second deadband midpoint moment tz2 of the half-bridge midpoint voltage is not repeatedly described herein, to avoid repetition.

It should be understood that, for the converter 100, it not only needs to be ensured that the primary switching transistor S1 is conducted at the resonant peak value of the half-bridge midpoint voltage, but also needs to be ensured that the resonant valley value of the half-bridge midpoint voltage is close to the zero voltage value as much as possible. In this way, it can be ensured that the primary switching transistor S 1 can implement ZVS, to ensure an overall ZVS control effect of the converter 100.

In some feasible implementations, when outputting the second rising edge, the control circuit 10 may be further configured to obtain a value of the second feedback voltage at the fifth moment t5 (for ease of distinguishing, the second target voltage value is used as a substitute for description below). Then, the control circuit 10 may compare the second target voltage value with a preset fourth adjustment threshold. The fourth adjustment threshold is a product of the maximum value vmax4 of the second feedback voltage and a fourth preset coefficient, and the fourth preset coefficient is greater than or equal to 0. 75 and is less than or equal to 0. 9. If the control circuit 10 determines that the second target voltage value is greater than or equal to the fourth adjustment threshold, next conduction duration of the auxiliary switching transistor S2 may be reduced. If the control circuit 10 determines that the second target voltage value is less than the fourth adjustment threshold, next conduction duration of the auxiliary switching transistor S2 may be increased. It should be noted that, when the control circuit 10 determines that the second target voltage value is less than the fourth adjustment threshold, it indicates that a resonant valley value of the half-bridge midpoint voltage at the fifth moment t5 has not reached a requirement, and a next resonant valley value needs to be further reduced. The resonant valley value of the half-bridge midpoint voltage is controlled based on the conduction duration of the auxiliary switching transistor, and longer conduction duration of the auxiliary switching transistor S2 indicates that the resonant valley value of the half-bridge midpoint voltage is closer to the zero voltage value, and the value of the second feedback voltage is closer to the minimum value vmin4 of the second feedback voltage. Therefore, when the control circuit 10 determines that the second target voltage value is less than the fourth adjustment threshold, it indicates that a next resonant valley value of the half-bridge midpoint voltage needs to be further reduced, and next conduction duration of the auxiliary switching transistor S2 may be reduced. If the control circuit 10 determines that the second target voltage value is greater than or equal to the second adjustment threshold, it indicates that a next resonant valley value of the half-bridge midpoint voltage needs to be increased, and next conduction duration of the auxiliary switching transistor S2 may be increased. For example, as shown in FIG. 15, the control circuit 10 may obtain the second target voltage value of the second feedback voltage at the fifth moment t5. Then, if the control circuit 10 determines that the second target voltage value is less than the fourth adjustment threshold, next conduction duration of the auxiliary switching transistor S2 may be increased, so that a conduction time period Tson2 of the auxiliary switching transistor S2 is greater than a conduction time period Tson1. In this way, a value of the second feedback voltage at a subsequent eighth moment t8 can be closer to the fourth adjustment threshold than the second target voltage value. Herein, the eighth moment t8 is a moment at which the half-bridge midpoint voltage reaches the resonant valley value next time.

**Embodiment 2**

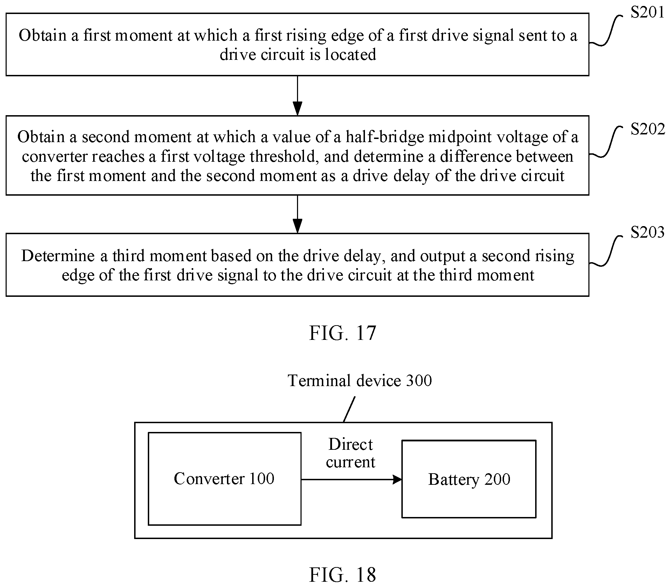

FIG. 17 is a schematic flowchart of a control method for a converter according to this application. Control of the converter provided in this application is applicable to the converter 100 provided in Embodiment 1, and may be performed by a control circuit 10 included in the converter 100. Herein, for a structure and a function of the converter 100, refer to Embodiment 1. Details are not described herein again. The control method may include the following steps.

S201: Obtain a first moment at which a first rising edge of a first drive signal sent to a drive circuit is located.

In some feasible implementations, the control circuit 10 may obtain a first moment t1 at which a first rising edge of a first drive signal sent to a drive circuit 20 is located. The first rising edge may be a 1st rising edge of the first drive signal, or may be a rising edge at any moment after the 1st rising edge of the first drive signal. In other words, the control circuit 10 may start to perform the control method provided in this application in a process in which the control circuit 10 controls, for a first time, a primary switching transistor S1 and an auxiliary switching transistor S2 to be conducted and cut off, or may start to perform the control method provided in this application only after the control circuit 10 has controlled a primary switching transistor S1 and an auxiliary switching transistor S2 to be conducted and cut off for a plurality of times. Herein, for a specific process in which the control circuit 10 obtains the first moment t1, refer to a specific process in which the control circuit 10 obtains the first moment t1 described in Embodiment 1. Details are not described herein again.

S202: Obtain a second moment at which a value of a half-bridge midpoint voltage of the converter reaches a first voltage threshold, and determine a difference between the first moment and the second moment as a drive delay of the drive circuit.

In some feasible implementations, the control circuit 10 may obtain a second moment t2 at which the value of the half-bridge midpoint voltage of the converter 100 reaches the first voltage threshold, and determine a difference between the first moment t1 and the second moment t2 as a drive delay td of the drive circuit 20. Herein, the first voltage threshold may be an input voltage value vin of the converter 100 or a zero voltage value.

The following separately describes, based on different structures of the converter 100, a process of determining the second moment t2.

Implementation scenario 1:

In Implementation scenario 1, the auxiliary switching transistor S2 of the converter 100 is connected to a reference ground, and the first voltage threshold is the input voltage value vin of the converter 100. A transformer 30 of the converter 100 includes an auxiliary winding Na, a first voltage divider resistor R1, and a second voltage divider resistor R2 that are connected in series, and one terminal of the second voltage divider resistor R2 is connected to the reference ground. In addition, the auxiliary winding Na and a primary-side winding Np of the transformer 30 are coupled by changing an undotted terminal.

In an optional implementation, the control circuit 10 may be configured to obtain a first feedback voltage from a common terminal of the first voltage divider resistor R1 and the second voltage divider resistor R2. The control circuit 10 may further determine that a moment at which the control circuit 10 detects, for a first time, that a value of the first feedback voltage is less than a second voltage threshold vrefl is a second moment t2 at which the value of the half-bridge midpoint voltage of the converter 100 reaches the input voltage value of the converter. The second voltage threshold vref1 is less than a zero voltage value, and a difference between the second voltage threshold vref1 and the zero voltage value is less than or equal to a first preset difference value. For a specific process, refer to a corresponding process described in Embodiment 1. Details are not described herein again.

Implementation scenario 2:

In Implementation scenario 1, the auxiliary switching transistor S2 of the converter 100 is connected to a reference ground, and the first voltage threshold is the input voltage value vin of the converter 100. A transformer 30 of the converter 100 includes an auxiliary winding Na, a first voltage divider resistor R1, and a second voltage divider resistor R2 that are connected in series, and one terminal of the second voltage divider resistor R2 is connected to the reference ground, and the auxiliary winding Na and a primary-side winding Np of the transformer 30 are coupled by changing a dotted terminal.

In an optional implementation, the control circuit 10 may be configured to obtain a first feedback voltage from a common terminal of the first voltage divider resistor R1 and the second voltage divider resistor R2. The control circuit 10 may determine that a moment at which the control circuit 10 detects, for a first time, that a value of the first feedback voltage is greater than a third voltage threshold vref3 is a second moment t2 at which the value of the half-bridge midpoint voltage of the converter 100 reaches the input voltage value of the converter. The third voltage threshold vref2 is greater than a zero voltage value, and a difference between the third voltage threshold vref2 and the zero voltage value is less than or equal to a second preset difference value. For a specific process, refer to a corresponding process described in Embodiment 1. Details are not described herein again.

Implementation scenario 3:

In Implementation scenario 3, the primary switching transistor S1 of the converter 100 is connected to a reference ground, and the first voltage threshold is a zero voltage value. A transformer 30 of the converter 100 includes an auxiliary winding Na, a first voltage divider resistor R1, and a second voltage divider resistor R2 that are connected in series, and one terminal of the second voltage divider resistor R2 is connected to the reference ground, and the auxiliary winding Na and a primary-side winding Np of the transformer 30 are coupled by changing an undotted terminal.

In an optional implementation, the control circuit 10 may be configured to obtain a second feedback voltage from a common terminal of the first voltage divider resistor R1 and the second voltage divider resistor R2. The control circuit 10 may determine that a moment at which the control circuit 10 detects, for a first time, that a value of the second feedback voltage is less than a fourth voltage threshold vref3 is a second moment t2 at which the value of the half-bridge midpoint voltage of the converter 100 reaches the zero voltage value. The fourth voltage threshold vref3 is less than the zero voltage value, and a difference between the fourth voltage threshold vref3 and the zero voltage value is less than or equal to a third preset difference value. For a specific process, refer to a corresponding process described in Embodiment 1. Details are not described herein again.

Implementation scenario 4:

In Implementation scenario 3, the primary switching transistor S1 of the converter 100 is connected to a reference ground, and the first voltage threshold is a zero voltage value. A transformer 30 of the converter 100 includes an auxiliary winding Na, a first voltage divider resistor R1, and a second voltage divider resistor R2 that are connected in series, and one terminal of the second voltage divider resistor R2 is connected to the reference ground, and the auxiliary winding Na and a primary-side winding Np of the transformer 30 are coupled by changing a dotted terminal. In an optional implementation, the control circuit 10 may be configured to obtain a second feedback voltage from a common terminal of the first voltage divider resistor R1 and the second voltage divider resistor R2. The control circuit 10 may determine that a moment at which the control circuit 10 detects, for a first time, that the value of the second feedback voltage is greater than a fifth voltage threshold vref4 is a second moment t2 at which the value of the half-bridge midpoint voltage of the converter 100 reaches the zero voltage value. The fifth voltage threshold vref4 is greater than the zero voltage value, and a difference between the fifth voltage threshold vref4 and the zero voltage value is less than or equal to a fourth preset difference value. For a specific process, refer to a corresponding process described in Embodiment 1. Details are not described herein again.

S203: Determine a third moment based on the drive delay, and output a second rising edge of the first drive signal to the drive circuit at the third moment.

In some feasible implementations, after obtaining the drive delay td, the control circuit 10 may determine, based on the drive delay td, a third moment t3 at which the control circuit 10 conducts the primary switching transistor S1 again, and send the second rising edge of the first drive signal to the drive circuit 20 at the third moment t3.

In an optional implementation, when the auxiliary switching transistor S2 is connected to the reference ground (that is, corresponding to Implementation scenario 1 or Implementation scenario 2 described in step S202), the control circuit 10 may determine a fourth moment t4 at which the half-bridge midpoint voltage reaches a resonant peak value. Then, the control circuit 10 may determine the third moment t3 based on the fourth moment t4 and the drive delay td. The third moment t3 is before the fourth moment t4, and a time difference between the third moment t3 and the fourth moment t4 is the drive delay td. For a specific process, refer to descriptions of a corresponding process in Embodiment 1. Details are not described herein again.

Further, the control circuit 10 may obtain a first deadband midpoint moment tz1 of the half-bridge midpoint voltage. A value of the half-bridge midpoint voltage at the first deadband midpoint moment tz1 is a half of the resonant peak value. Then, the control circuit 10 may determine, based on the first deadband midpoint moment tz1 and one quarter of a resonance period of the half-bridge midpoint voltage, the fourth moment t4 at which the half-bridge midpoint voltage reaches the resonant peak value. The fourth moment is after the first deadband midpoint moment. For a specific process, refer to descriptions of a corresponding process in Embodiment 1. Details are not described herein again.

Optionally, the transformer 30 of the converter 100 includes the auxiliary winding Na, the first voltage divider resistor R1, and the second voltage divider resistor R2 that are connected in series, and one terminal of the second voltage divider resistor R2 is connected to the reference ground. When the auxiliary winding Na and the primary-side winding Np of the transformer 30 are coupled by changing the undotted terminal or changing the dotted terminal (that is, the scenario 1 and the scenario 2 described in step S202), the control circuit 10 may be configured to obtain the first feedback voltage from a common terminal of the first voltage divider resistor R1 and the second voltage divider resistor R2. Then, after determining that the auxiliary switching transistor S2 is cut off, the control circuit 10 may determine that a moment at which the value of the first feedback voltage reaches the zero voltage value is the first deadband midpoint moment tz1 of the half-bridge midpoint voltage. For a specific process, refer to descriptions of a corresponding process in Embodiment 1. Details are not described herein again.

In another optional implementation, when the primary switching transistor S1 is connected to the reference ground (that is, corresponding to Implementation scenario 3 or Implementation scenario 4 described in step S202), the control circuit 10 may determine a fifth moment t5 at which the half-bridge midpoint voltage reaches a resonant valley value. Then, the control circuit 10 may determine the third moment t3 based on the fifth moment t5 and the drive delay td. The third moment t3 is before the fifth moment t5, and a time difference between the third moment t3 and the fifth moment t5 is the drive delay td. For a specific process, refer to descriptions of a corresponding process in Embodiment 1. Details are not described herein again.

Further, the control circuit 10 may obtain a second deadband midpoint moment tz2 of the half-bridge midpoint voltage. A value of the half-bridge midpoint voltage at the second deadband midpoint moment tz2 is a sum of the resonant valley value and a half of a difference between an input voltage value of the converter and a resonant valley value of the half-bridge midpoint voltage (for ease of description, the second deadband midpoint is used as a substitute for description below). Then, the control circuit 10 may determine, based on the second deadband midpoint moment tz2 and one quarter of the resonance period of the half-bridge midpoint voltage, the fifth moment t5 at which the half-bridge midpoint voltage reaches the resonant valley value. For a specific process, refer to descriptions of a corresponding process in Embodiment 1. Details are not described herein again.

Optionally, the transformer 30 of the converter 100 includes the auxiliary winding Na, the first voltage divider resistor R1, and the second voltage divider resistor R2 that are connected in series, and one terminal of the second voltage divider resistor R2 is connected to the reference ground. When the auxiliary winding Na and the primary-side winding Np of the transformer 30 are coupled by changing the undotted terminal or changing the dotted terminal, the control circuit 10 may be configured to obtain the second feedback voltage from a common terminal of the first voltage divider resistor R1 and the second voltage divider resistor R2. Then, after determining that the auxiliary switching transistor S2 is cut off, the control circuit 10 may determine that a moment at which the value of the second feedback voltage reaches the zero voltage value is the second deadband midpoint moment tz2 of the half-bridge midpoint voltage. For a specific process, refer to descriptions of a corresponding process in Embodiment 1. Details are not described herein again.

In some feasible implementations, in the scenario 1 described in step S202, when outputting the second rising edge, the control circuit 10 may be further configured to obtain a value of the first feedback voltage at the fourth moment t4 (for ease of distinguishing, the first target voltage value is used as a substitute for description below). Then, the control circuit 10 may compare the first target voltage value with a preset first adjustment threshold. The first adjustment threshold is a product of the minimum value vmin1 of the first feedback voltage and a first preset coefficient, and the first preset coefficient is greater than or equal to 0. 75 and is less than or equal to 0. 9. If the control circuit 10 determines that the first target voltage value is less than or equal to the first adjustment threshold, next conduction duration of the auxiliary switching transistor S2 may be reduced. If the control circuit 10 determines that the first target voltage value is greater than the first adjustment threshold, next conduction duration of the auxiliary switching transistor S2 may be increased.

In some feasible implementations, in the scenario 2 described in step S202, when outputting the second rising edge, the control circuit 10 may be further configured to obtain the first target voltage value of the first feedback voltage at the fourth moment t4. Then, the control circuit 10 may compare the first target voltage value with a preset second adjustment threshold. The second adjustment threshold is a product of a maximum value vmax2 of the first feedback voltage and a second preset coefficient, and the second preset coefficient is greater than or equal to 0. 75 and less than or equal to 0. 9. If the control circuit 10 determines that the first target voltage value is less than the first adjustment threshold, next conduction duration of the auxiliary switching transistor S2 may be increased. If the control circuit 10 determines that the first target voltage value is greater than or equal to the first adjustment threshold, next conduction duration of the auxiliary switching transistor S2 may be reduced.

In some feasible implementations, in the scenario 3 described in step S202, when outputting the second rising edge, the control circuit 10 may be further configured to obtain a value of the second feedback voltage at the fifth moment t5 (for ease of distinguishing, the second target voltage value is used as a substitute for description below). Then, the control circuit 10 may compare the second target voltage value with a preset third adjustment threshold. The third adjustment threshold is a product of the minimum value vmin3 of the second feedback voltage and a third preset coefficient, and the third preset coefficient is greater than or equal to 0. 75 and less than or equal to 0. 9. If the control circuit 10 determines that the second target voltage value is less than or equal to the third adjustment threshold, next conduction duration of the auxiliary switching transistor S2 may be reduced. If the control circuit 10 determines that the second target voltage value is less than the third adjustment threshold, next conduction duration of the auxiliary switching transistor S2 may be increased.

In some feasible implementations, in the scenario 4 described in step S202, when outputting the second rising edge, the control circuit 10 may be further configured to obtain the second target voltage value of the second feedback voltage at the fifth moment t5. Then, the control circuit 10 may compare the second target voltage value with a preset fourth adjustment threshold. The fourth adjustment threshold is a product of the maximum value vmax4 of the second feedback voltage and a fourth preset coefficient, and the fourth preset coefficient is greater than or equal to 0. 75 and is less than or equal to 0. 9. If the control circuit 10 determines that the second target voltage value is greater than or equal to the fourth adjustment threshold, next conduction duration of the auxiliary switching transistor S2 may be reduced. If the control circuit 10 determines that the second target voltage value is less than the fourth adjustment threshold, next conduction duration of the auxiliary switching transistor S2 may be increased.

Herein, it should be further noted that, in an actual implementation, for the control circuit 10, after the control circuit 10 outputs the second rising edge of the first drive signal at the determined third moment t3, the control circuit 10 needs to perform the control method provided in this application again, to determine a seventh moment t7 at which a next resonant peak value of the half-bridge midpoint voltage occurs or an eighth moment t8 at which a next resonant valley value occurs. A specific process may be similar to the foregoing process of determining the fourth moment t4 or the fifth moment t5. Then, the control circuit 10 may determine, with reference to the foregoing determined drive delay td and the seventh moment t7 or the eighth moment t8 at which the next resonant valley value occurs, a moment at which the control circuit 10 outputs a new rising edge again. In other words, in the control method provided in this application, the drive delay td does not need to be repeatedly determined. However, after each time the control circuit 10 outputs a rising edge of the first drive signal, the control circuit 10 needs to repeat the control method provided in this application, to determine a moment at which a next rising edge of the first drive signal is located. In this way, it can be ensured that the primary switching transistor S1 can always be conducted at the resonant peak value or the resonant valley value.

In the control method for a converter provided in this application, the control circuit 10 may accurately detect the drive delay generated by the drive circuit 20, and may further accurately determine, with reference to the drive delay, the third moment t3 at which the control circuit 10 conducts the primary switching transistor S 1 again. In this way, a problem that use complexity of an existing converter is high because the drive delay needs to be manually configured. In addition, because a drive delay detected in real time is more accurate, when the second rising edge of the first drive signal is output at the third moment t3 determined based on the drive delay, it can be ensured that the primary switching transistor S 1 is accurately conducted at the resonant peak value or the resonant valley value of the half-bridge midpoint voltage. In this way, an overall ZVS control effect of the converter 100 can be improved, and working efficiency of the converter 100 can be improved.

An embodiment of this application further provides a control circuit for a converter. The control circuit may be the control circuit 10 described in Embodiment 1 or Embodiment 2. For a structure and a function of the control circuit, refer to descriptions of the structure and the function of the control circuit 10 in Embodiment 1 or Embodiment 2. Details are not described herein again.

FIG. 18 is a schematic diagram of a structure of a terminal device according to this application. As shown in FIG. 18, a terminal device 300 includes the foregoing converter 100 and a battery 200. The converter 100 is connected to the battery 200. The converter 100 is configured to: obtain a direct current through conversion, and charge the battery 200 by using the direct current. It should be noted that, the terminal device 300 may be a smartphone, a tablet computer, a smart speaker, a wearable device, or the like.

In an optional implementation, when power of the terminal device 300 is insufficient, the converter 100 may perform direct current conversion on a first direct current provided by an external direct current power supply, to obtain a second direct current of a working voltage required by the terminal device 300, and output the second direct current to the battery 200, to charge the battery 200. Similarly, in a process in which the converter 100 charges the battery 200, control logic described in Embodiment 1 or Embodiment 2 may be used, to achieve a corresponding ZVS control effect. In a specific implementation, for more operations performed by the converter 100 in the terminal device 300 provided in this application, refer to the implementations performed by the converter 100 in Embodiment 1 or Embodiment 2. Details are not described herein again.

In the specification, claims, and accompanying drawings of this application, the terms "first", "second", "third", "fourth", and the like are intended to distinguish between different objects but do not indicate a particular order. In addition, the terms "including", "having", or any other variant thereof are intended to cover a non-exclusive inclusion. For example, a process, a method, a system, a product, or a device that includes a series of steps or units is not limited to the listed steps or units, but optionally further includes unlisted steps or units, or optionally further includes other inherent steps or units of the process, the method, the product, or the device.

An "embodiment" mentioned in this specification means that a particular feature, structure, or characteristic described with reference to this embodiment may be included in at least one embodiment of this application. The phrase appear at various locations in this specification may neither necessarily mean a same embodiment, nor mean an independent or optional embodiment exclusive from another embodiment. It is explicitly and implicitly understood by a person skilled in the art that embodiments described in this specification may be combined with another embodiment.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A converter, wherein the converter comprises a primary switching transistor, an auxiliary switching transistor, a drive circuit, and a control circuit, the primary switching transistor and the auxiliary switching transistor are connected in series between an input terminal of the converter and a reference ground, and the control circuit is connected to each of the primary switching transistor and the auxiliary switching transistor through the drive circuit; and
the control circuit is configured to:

   obtain a first moment at which a first rising edge of a first drive signal is located, wherein the first drive signal is used by the drive circuit to conduct or cut off the primary switching transistor;
   obtain a second moment at which a value of a half-bridge midpoint voltage of the converter reaches a first voltage threshold, and determine a difference between the first moment and the second moment as a drive delay of the drive circuit, wherein the first voltage threshold is an input voltage value of the converter or a zero voltage value; and
   determine a third moment based on the drive delay, and output a second rising edge of the first drive signal to the drive circuit at the third moment.

2. The converter according to claim 1, wherein the auxiliary switching transistor is connected to the reference ground, and the control circuit is configured to:

   determine a fourth moment at which the half-bridge midpoint voltage reaches a resonant peak value; and
   determine the third moment based on the fourth moment and the drive delay, wherein the third moment is before the fourth moment, and a time difference between the third moment and the fourth moment is the drive delay.

3. The converter according to claim 2, wherein the control circuit is configured to:

   obtain a first deadband midpoint moment of the half-bridge midpoint voltage, wherein a value of the half-bridge midpoint voltage at the first deadband midpoint moment is a half of the resonant peak value; and
   determine, based on the first deadband midpoint moment and one quarter of a resonance period of the half-bridge midpoint voltage, the fourth moment at which the half-bridge midpoint voltage reaches the resonant peak value.

4. The converter according to claim 3, wherein the converter further comprises a transformer, input terminals of the transformer are respectively connected to two terminals of the auxiliary switching transistor, an output terminal of the transformer is connected to an output terminal of the converter, the transformer comprises an auxiliary winding, a first voltage divider resistor, and a second voltage divider resistor that are connected in series, the auxiliary winding and a primary-side winding of the transformer are coupled by changing an undotted terminal or changing a dotted terminal, and one terminal of the second voltage divider resistor is connected to the reference ground; and
the control circuit is configured to:

> obtain a first feedback voltage from a common terminal of the first voltage divider resistor and the second voltage divider resistor; and
> after determining that the auxiliary switching transistor is cut off, determine that a moment at which a value of the first feedback voltage reaches a zero voltage value is the first deadband midpoint moment of the half-bridge midpoint voltage.

5. The converter according to claim 4, wherein the control circuit comprises a controller and a first comparator, a first terminal of the first comparator is connected to the common terminal of the first voltage divider resistor and the second voltage divider resistor, a second terminal of the first comparator is connected to the reference ground, and a third terminal of the first comparator is connected to a first terminal of the controller;

> the first comparator is configured to: obtain a first feedback voltage from the common terminal of the first voltage divider resistor and the second voltage divider resistor, and send a first indication signal to the controller when it is detected that a value of the first feedback voltage is equal to a zero voltage value; and
> after determining that the auxiliary switching transistor is cut off, the controller is configured to determine that a moment at which the first indication signal is detected is the first deadband midpoint moment of the half-bridge midpoint voltage.

6. The converter according to claim 4 or 5, wherein the first voltage threshold is the input voltage value of the converter, and the auxiliary winding and the primary-side winding of the transformer are coupled by changing the undotted terminal; and
the control circuit is configured to:
determine that a moment at which it is detected for a first time that the value of the first feedback voltage is less than a second voltage threshold is the second moment at which the value of the half-bridge midpoint voltage of the converter reaches the input voltage value of the converter, wherein the second voltage threshold is less than a zero voltage value, and a difference between the second voltage threshold and the zero voltage value is less than or equal to a first preset difference value.

7. The converter according to claim 6, wherein the control circuit comprises the controller, a timer, and a second comparator, a first terminal of the second comparator is connected to the common terminal of the first voltage divider resistor and the second voltage divider resistor, a second terminal of the second comparator is connected to a first reference voltage source, a voltage value of the first reference voltage source is the second voltage threshold, a third terminal of the second comparator is connected to a first terminal of the timer, a second terminal of the timer is connected to a second terminal that is of the controller and that outputs the first drive signal, and a third terminal of the timer is connected to a third terminal of the controller;

> the timer is configured to: determine that a moment at which the first rising edge is detected is the first moment, and start timing at the first moment;
> the second comparator is configured to send a second indication signal to the timer when it is detected for the first time that the value of the first feedback voltage is less than the second voltage threshold;
> the timer is configured to: determine that a moment at which the second indication signal is detected is the second moment, and stop timing at the second moment; and
> the controller is further configured to: obtain timing duration of the timer, and determine the timing duration as the drive delay.

8. The converter according to claim 4 or 5, wherein the first voltage threshold is the input voltage value of the converter, and the auxiliary winding and the primary-side winding of the transformer are coupled by changing the dotted terminal; and
the control circuit is configured to:
determine that a moment at which it is detected for a first time that the value of the first feedback voltage is greater than a third voltage threshold is the second moment at which the value of the half-bridge midpoint voltage of the converter reaches the input voltage value of the converter, wherein the third voltage threshold is greater than a zero voltage value, and a difference between the third voltage threshold and the zero voltage value is less than or equal to a second preset difference value.

9. The converter according to claim 8, wherein the control circuit comprises the controller, a timer, and a second comparator, a first terminal of the second comparator is connected to the common terminal of the first voltage divider resistor and the second voltage divider resistor, a second terminal of the second comparator is connected to a second reference voltage source, a voltage value of the second reference voltage source is the third voltage threshold, a third terminal of the second comparator is connected to a first terminal of the timer, a second terminal of the timer is connected to a second terminal that is of the control circuit and that outputs the first drive signal, and a third terminal of the timer is connected to a third terminal of the controller;

the timer is configured to: determine that a moment at which the first rising edge is detected is the first moment, and start timing at the first moment;

the second comparator is configured to send a second indication signal to the timer when it is detected for the first time that the value of the first feedback voltage is greater than the third voltage threshold;

the timer is configured to: determine that a moment at which the second indication signal is detected is the second moment, and stop timing at the second moment; and

the controller is further configured to: obtain timing duration of the timer, and determine the timing duration as the drive delay.

10. The converter according to claim 1, wherein the primary switching transistor is connected to the reference ground, and the control circuit is configured to:

determine a fifth moment at which the half-bridge midpoint voltage reaches a resonant valley value; and

determine the third moment based on the fifth moment and the drive delay, wherein the third moment is before the fifth moment, and a time difference between the third moment and the fifth moment is the drive delay.

11. The converter according to claim 10, wherein the control circuit is configured to:

obtain a second deadband midpoint moment of the half-bridge midpoint voltage, wherein a value of the half-bridge midpoint voltage at the second deadband midpoint moment is a sum of the resonant valley value and a half of a difference between the input voltage value of the converter and the resonant valley value of the half-bridge midpoint voltage; and

determine, based on the second deadband midpoint moment and one quarter of a resonance period of the half-bridge midpoint voltage, the fifth moment at which the half-bridge midpoint voltage reaches the resonant valley value.

12. The converter according to claim 11, wherein the converter further comprises a transformer, input terminals of the transformer are respectively connected to two terminals of the auxiliary switching transistor, an output terminal of the transformer is connected to an output terminal of the converter, the transformer comprises an auxiliary winding, a first voltage divider resistor, and a second voltage divider resistor that are connected in series, the auxiliary winding and a primary-side winding of the transformer are coupled by changing an undotted terminal or changing a dotted terminal, and one terminal of the second voltage divider resistor is connected to the reference ground; and

the control circuit is configured to:

obtain a second feedback voltage from a common terminal of the first voltage divider resistor and the second voltage divider resistor; and
after determining that the auxiliary switching transistor is cut off, determine that a moment at which a value of the second feedback voltage reaches a zero voltage value is the second deadband midpoint moment of the half-bridge midpoint voltage.

13. The converter according to claim 12, wherein the first voltage threshold is a zero voltage value, and the auxiliary winding and the primary-side winding of the transformer are coupled by changing the undotted terminal; and

the control circuit is configured to:
determine that a moment at which it is detected for a first time that the value of the second feedback voltage is less than a fourth voltage threshold is the second moment at which the value of the half-bridge midpoint voltage of the converter reaches a zero voltage value, wherein the fourth voltage threshold is less than the zero voltage value, and a difference between the fourth voltage threshold and the zero voltage value is less than or equal to a third preset difference value.

14. A control method for a converter, wherein the converter comprises a primary switching transistor, an auxiliary switching transistor, and a drive circuit, the primary switching transistor and the auxiliary switching transistor are connected in series between an input terminal of the converter and a reference ground, and the drive circuit is connected to each of the primary switching transistor and the auxiliary switching transistor; and

the method comprises:

obtaining a first moment at which a first rising edge of a first drive signal sent to the drive circuit is located, wherein the first drive signal is used to conduct or cut off the primary switching transistor;

obtaining a second moment at which a value of a half-bridge midpoint voltage of the converter reaches a first voltage threshold, and determining a difference between the first moment and the second moment as a drive delay of the drive circuit, wherein the first voltage threshold is an input voltage value of the converter or a zero voltage value; and

determining a third moment based on the drive delay, and outputting a second rising edge of the first drive signal to the drive circuit at the third moment.

15. The control method according to claim 14, wherein the auxiliary switching transistor is connected to the reference ground, and the determining a third moment based on the drive delay comprises:

determining a fourth moment at which the half-bridge midpoint voltage reaches a resonant peak value; and

determining the third moment based on the fourth moment and the drive delay, wherein the third moment is before the fourth moment, and a time difference between the third moment and the fourth moment is the drive delay.

FIG. 1

First direct current

in1

Converter 100

Control circuit 10

Drive circuit 20

Second drive signal

First drive signal

Second switching signal

First switching signal

S2

S1

in21

in22

Half-bridge midpoint

Transformer 30

out1

out2

Second direct current

FIG. 2

EP 4 346 074 A1

First rising
edge

Second
rising edge

First drive signal

Second drive
signal

First switching
signal

Second
switching signal

Half-bridge
midpoint voltage

vin

Resonant
peak value

Resonant
peak value

Half of the resonant
peak value

0

t1    t2

tz1    t3

t6    t4

FIG. 3

FIG. 4

FIG. 5

FIG. 6

EP 4 346 074 A1

FIG. 7

FIG. 8

EP 4 346 074 A1

FIG. 9

EP 4 346 074 A1

EP 4 346 074 A1

First rising
edge

Second
rising edge

First drive signal

Second drive
signal

Fourth
rising edge

First switching
signal

Second
switching signal

Half-bridge
midpoint voltage

Second deadband midpoint value

vin

Resonant
valley value

Resonant
valley value

0

t1 → ← t2

tz2 → ← t3

t6    t5

FIG. 10

FIG. 11

FIG. 12

Converter 100

Transformer 30

D1

Co

out21

out22

Fi

Ns

Np

Lm

Lr

in21

Half-bridge midpoint

Cr

in22

S2

Second switching signal

S1

First switching signal

Common terminal

Fi

Na

R1

R2

Second feedback voltage

Drive circuit 20

Second drive signal

First drive signal

Control circuit 10

Controller 101

Third indication signal

First comparator 103

Second comparator 104

Third reference power supply 107

Fourth indication signal

Timer 102

in1

Cin

FIG. 13

FIG. 14

EP 4 346 074 A1

First rising edge

Second rising edge

First drive signal

Second drive signal

Fourth rising edge

First switching signal

Second switching signal

Value at a moment tz2

Half-bridge midpoint voltage

vin

Resonant valley value

Resonant valley value

0

vin−vcr

0

Primary-side voltage

−vcr

Second target voltage value

Fourth adjustment threshold

Second feedback voltage

vref4

0

Zero crossing point

t1    t2

tz2    t3

t6    t5

t8

FIG. 15

EP 4 346 074 A1

FIG. 16

Converter 100

in1

Control circuit 10

Transformer 30

EP 4 346 074 A1

48

Obtain a first moment at which a first rising edge of a first drive signal sent to a drive circuit is located ⌒ S201

Obtain a second moment at which a value of a half-bridge midpoint voltage of a converter reaches a first voltage threshold, and determine a difference between the first moment and the second moment as a drive delay of the drive circuit ⌒ S202

Determine a third moment based on the drive delay, and output a second rising edge of the first drive signal to the drive circuit at the third moment ⌒ S203

FIG. 17

Terminal device 300

| Converter 100 | Direct current → | Battery 200 |

FIG. 18

Europäisches
Patentamt
European
Patent Office
Office européen
des brevets

# EUROPEAN SEARCH REPORT

Application Number

EP 23 19 5059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2019 217098 A1 (ZAHNRADFABRIK FRIEDRICHSHAFEN [DE]) 6 May 2021 (2021-05-06) | 1,14 | INV. H02M1/00 |
| Y | * figures 1-8 * * paragraphs [0004], [0029], [0054] – [0056], [0074] – [0078] * | 1-15 | ADD. H02M3/335 H02M3/00 |
| Y | US 2006/215424 A1 (ASO SHINJI [JP] ET AL) 28 September 2006 (2006-09-28) * figures 4,5,6,7 * * paragraphs [0029], [0054] – [0056], [0074] – [0076] * | 1,10-14 | |
| Y | CHIANG C-Y ET AL: "Automatic gating control of lowest voltage switching for boundary mode buck converters", THE INSTITUTION OF ENGINEERING AND TECHNOLOGY. JOURNAL,, vol. 3, no. 5, 1 September 2010 (2010-09-01), pages 649-656, XP006035946, ISSN: 1755-4543, DOI: 10.1049/IET-PEL:20090007 * figures 1-6 * * Sections 2, 3 * | 1-9,14, 15 | |

-/--

TECHNICAL FIELDS
SEARCHED (IPC)

H02M

The present search report has been drawn up for all claims

| Place of search | Date of completion of the search | Examiner |
|---|---|---|
| The Hague | 8 February 2024 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHENG WEI-CHUN ET AL: "Optimal Lowest-Voltage-Switching for Boundary Mode Power Factor Correction Converters", IEEE TRANSACTIONS ON POWER ELECTRONICS, INSTITUTE OF ELECTRICAL AND ELECTRONICS ENGINEERS, USA, vol. 30, no. 2, 1 February 2015 (2015-02-01), pages 1042-1049, XP011560826, ISSN: 0885-8993, DOI: 10.1109/TPEL.2014.2308911 [retrieved on 2014-10-07] * figures 1,3,4,5,6 * ----- | 1-15 | |
| A | CN 113 937 988 A (JOULWATT MICROELECTRONICS CO LTD) 14 January 2022 (2022-01-14) * figures 1-9 * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 8 February 2024 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 5059

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2024

| Patent document cited in search report | Publication date | Patent family member(s) | | Publication date |
|---|---|---|---|---|
| DE 102019217098 A1 | 06-05-2021 | NONE | | |
| US 2006215424 A1 | 28-09-2006 | JP | 4701763 B2 | 15-06-2011 |
| | | JP | 2006262566 A | 28-09-2006 |
| | | KR | 20060100256 A | 20-09-2006 |
| | | US | 2006215424 A1 | 28-09-2006 |
| CN 113937988 A | 14-01-2022 | CN | 113937988 A | 14-01-2022 |
| | | US | 2022416644 A1 | 29-12-2022 |

EPO FORM P0459

For more details about this annex : see Official Journal of the European Patent Office, No. 12/82